# EUROPEAN PATENT APPLICATION

(11) **EP 1 286 264 A2**
(43) Date of publication of application: **26.02.2003**
(21) Application number: 02255578.3
(22) Date of filing: 09.08.2002
(51) Int. Cl.: G06F 9/46

(54) **Device for task scheduling with priority levels**

(30) Priority: 09.08.2001 JP 2001242183
(71) Applicant: MATSUSHITA ELECTRIC INDUSTRIAL CO., LTD., Kadoma-shi, Osaka 571-8501 (JP)
(72) Inventor: Nishimura, Kozo, Settu-shi, Osaka-fu 566-0043 (JP); Owada, Kiyoshi, Hirakata-shi, Osaka-fu 573-1106 (JP); Kuroda, Toyoharu, Hirakata-shi, Osaka-fu 573-0095 (JP)
(74) Representative: Butcher, Ian James

(57) **Abstract**

A task scheduling device specifies tasks to be executed one at a time. The device performs priority level scheduling in task group units on a round-robin basis, and selects one of the task groups. Then, on a round-robin basis using a timeslice period set for each of the tasks, the device performs priority level scheduling on all the tasks included in the selected task group, and specifies one of the tasks as the execution target. If the timeslice period of a task being executed has yet to elapse when another task group is selected, then next time the task is specified as the execution target, the device executes the task for the remainder of the timeslice period rather than the full timeslice period. In this way, the task scheduling device is able to effectively allocate and control the time period distributed for the execution of each of the tasks.

## Description

### BACKGROUND OF THE INVENTION

### 1. Field of the Invention

The present invention relates to task scheduling operations performed by an operating system (OS) of a computer.

### 2. Related Art

In a task scheduling method conventionally used by an operating system (OS) to schedule a plurality of tasks, the tasks are executed sequentially in accordance with a priority level determined for each of the tasks. Furthermore, when plural tasks have the same priority level, the tasks are commonly executed in order on a round-robin basis within a limited time period shown by a timeslice value.

Here, a task scheduling device as referred to herein corresponds to a part of the OS, and tasks are processing units targeted for scheduling, each task generally corresponding to an entire application program (AP) or a section of an AP. As a result of a scheduling operation performed by a task scheduling device, all or a section of an AP corresponding to a task to be executed is sequentially allotted a period of CPU processing time, and executed sequentially by the CPU under the control of a conventional program execution control device, which corresponds to a part of the OS. Hereafter, the "execution of a task" is defined to mean the execution of all or a section of an AP corresponding to the task.

The following description relates to an exemplary prior art task scheduling device.

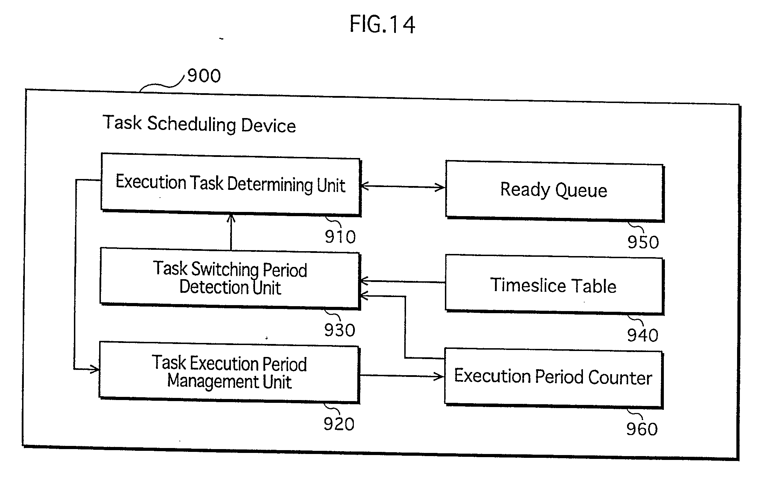

Fig.14 is a functional block diagram of an exemplary prior art task scheduling device 900.

As shown in Fig.14, task scheduling device 900 includes an execution task determining unit 910, a task execution period management unit 920, a task switching period detection unit 930, a timeslice table 940, a ready queue 950, and an execution period counter 960.

Here, timeslice table 940 is a memory area for storing timeslice values corresponding to the tasks. Ready queue 950 is a memory area for storing task IDs identifying tasks that are in an executable-state, the task IDs being stored in order of priority so that they can be removed sequentially from a head of ready queue 950. Execution period counter 960 is a memory area for storing a count value showing the elapsed execution period of a task currently being executed.

A task entry device (not depicted) receives notification from the program execution control device of a task ID identifying a task in an executable-state. The task entry device stores the task ID in ready queue 950 in a position that corresponds with the priority level of the task identified by the task ID.

The program execution control device functions as follows. When an AP is booted or a predetermined notification is received from the AP, the program execution control device sends the task ID of a task that relates to all or a section of the AP to the task entry device as a task in an executable-state. Then, when execution of the task is instructed by task scheduling device 900, the program execution control device executes all or the section of the AP corresponding to the task, and performs general controls relating to the task, an example of which includes placing the task, in a waiting-state when notification of an input/output request is received from the AP currently being executed. When the task currently being executed is, for example, completed or placed in a waiting-state, the program execution control device sends a request to task scheduling device 900 to execute a subsequent task.

Here, when an instruction to execute a task is received and the command sequence of the AP corresponding to the task has already been partially executed, the program execution control device starts executing the AP from the subsequent command in the command sequence.

Execution task determining unit 910, task execution period management unit 920, and task switching period detection unit 930 are functional units whose respective functions are realized by a CPU executing a control program stored in memory, the control program corresponding to a part of the OS.

Execution task determining unit 910 functions as follows. When (i) a switching period detection notification is received from unit 930, or (ii) the task ID at the head of the ready queue is updated, or (iii) a request to execute a subsequent task is received from the program execution control device, unit 910 removes a task ID from the head of ready queue 950, and determines the task identified by the task ID as the execution target. Unit 910 then instructs the program execution control device to execute the task, and notifies unit 920 of the start of the execution. Furthermore, in the case of (i) above (i.e. the receipt of a switching period detection notification from unit 930), unit 910 inserts the task ID of the task that was being executed in ready queue 950 so to be positioned behind the task IDs of other tasks having the same priority level.

Task execution period management unit 920 functions as follows. When notified by unit 910 that the execution of a task has been started, unit 920 sets the count value of execution period counter 960 to zero, and begins incrementing the count value in accordance with the elapse of time.

Task switching period detection unit 930 refers to timeslice table 940 in order to obtain the timeslice value of the task currently being executed. Then, when unit 930 detects that the count value counted by execution period counter 960 is equal to the obtained timeslice value, counter 960 sends a switching period detection notification to unit 910.

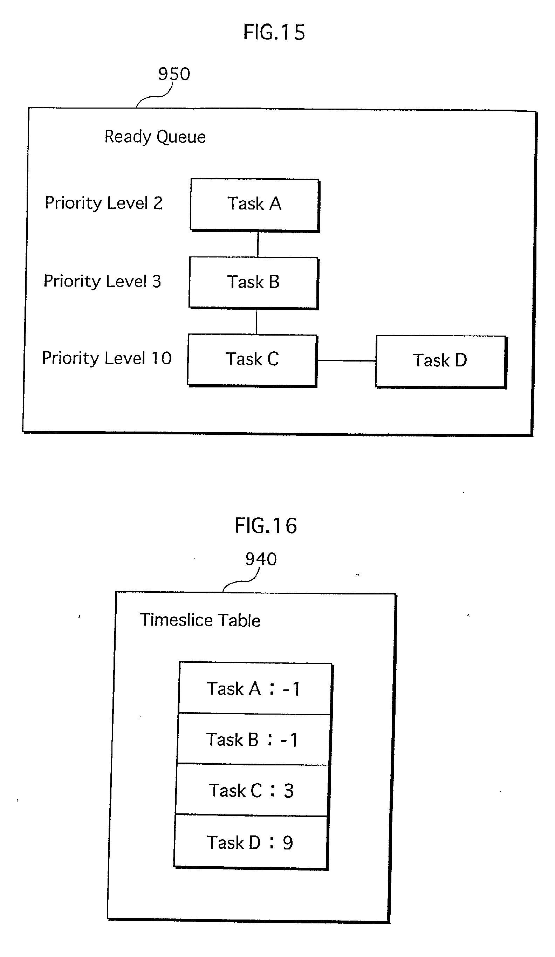

Fig.15 shows an exemplary content of ready queue 950 in prior art task scheduling device 900.

The content of ready queue 950 is depicted in Fig.15 in a manner that allows the priority levels of the tasks to be readily comprehended. In the given example, task A (priority level "2"), task B (priority level "3"), and tasks C and D (priority level "10") are stored in order of their priority levels. Here, the lower the numeral of the priority level, the higher the priority level of the task.

Fig.16 shows an exemplary content of timeslice table 940 in prior art task scheduling device 900.

In the given example, a timeslice value of "-1" is used to shown that the corresponding task has no time restrictions placed on its continuous execution. Thus, in Fig.16, no time restrictions are placed on the continuous execution of tasks A and B, while time restrictions corresponding to the timeslice values "3" and "9" are placed on the continuous execution of tasks C and D, respectively. Furthermore, no switching period detection notification is sent to execution task determining unit 910 from task switching period detection unit 930 during the execution of tasks having a "-1" timeslice value.

A detailed description of the operation of prior art task scheduling device 900 will now be given based on the conditions shown in Figs.15 and 16. Here, the generation of new tasks during the processing of the current tasks A to D is not included in the description of task scheduling device 900.

Execution task determining unit 910 firstly removes the task ID of task A from a head of ready queue 950 (here, the task ID of task A is positioned at the head of ready queue 950 because the priority level "2" of task A is the highest priority level in ready queue 950), determines task A as the execution target, and instructs the program execution control device to execute task A. Since task A has a timeslice value of "-1", task switching period detection unit 930 does not send a switching period notification to unit 910, and the execution of task A is continued until task A is, for example, completed or placed in a waiting-state.

When a request to execute a subsequent task is received from the program execution control device after task A has, for example, been completed or placed in a waiting-state, unit 910 removes the task ID of task B (priority level "3") from the head of ready queue 950, determines task B as the execution target, and instructs the program execution control device to execute task B. Since task B, like task A, has a timeslice value of "-1" (i.e. non-restricted continuous execution period), task switching period detection unit 930 does not send a switching period notification to unit 910, and the execution of task B is continued until task B is, for example, completed or placed in a waiting-state.

At this point in time, only the task IDs of tasks C and D remain in ready queue 950.

When a request to execute a subsequent task is received from the program execution control device after task B has, for example, been completed or placed in a waiting-state, unit 910 removes the task ID of task C (priority level "10") from the head of ready queue 950, determines task C as the execution target, instructs the program execution control device to execute task C, and notifies task execution period management unit 920 of the start of the execution of task C. Consequently, the execution of task C is started, and the count value of execution period counter 960 is incremented from the start of the execution period of task C in accordance with the elapse of time.

Next, task switching period detection unit 930 obtains the timeslice value (i.e. "3") of task C by referring to the timeslice table (see Fig.16), and when the count value of execution period counter 960 equals the obtained timeslice value "3", unit 930 sends a switching period detection notification to execution task determining unit 910. On receipt of the switching period detection notification, unit 910 inserts the task ID of task C at the end of ready queue 950, removes the task ID of task D (priority level "10") from the head of ready queue 950, determines task D as the execution target, instructs the program execution control device to execute task D, and notifies task execution period management unit 920 of the start of the execution of task D. Consequently, the execution of task C is stopped when a time period shown by timeslice value "3" elapses, the execution of task D is started, and the count value of execution period counter 960 is incremented from the start of the execution period of task D in accordance with the elapse of time.

Next, task switching period detection unit 930 obtains the timeslice value (i.e. "9") of task D by referring to the timeslice table (see Fig.16), and when the count value of execution period counter 960 equals the obtained timeslice value "9", unit 930 sends a switching period detection notification to execution task determining unit 910. On receipt of the switching period detection notification, unit 910 inserts the task ID of task D at the end of ready queue 950, removes the task ID of task C (priority level "10") from the head of ready queue 950, determines task C as the execution target, and instructs the program execution control device to execute task C. Consequently, the execution of task D is stopped when a time period shown by timeslice value "9" elapses, and the execution of task C is again started.

Thus, on the round-robin basis using timeslice values, the execution of tasks C and D is alternated until the tasks are completed.

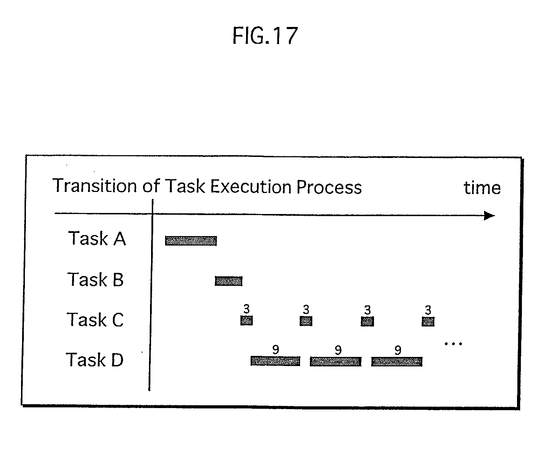

Fig.17 shows the transition over time of the task execution process described above.

As shown in Fig.17, task A is executed first, followed by task B, after which tasks C and D are executed alternately based on an execution period distribution of "3" to "9".

To give a further example, Japanese patent publication no.3005562 discloses a variation of the prior art task scheduling device described above. In the disclosed task scheduling device, a plurality of task groups are determined that each include tasks whose priority level falls within a predetermined range. By switching, in task group units, the ready-state and waiting-state of the tasks at regular time intervals, the disclosed task scheduling device is able to provide a time period to each task group within which the tasks in the task group are to be executed.

With respect to an AP capable of realizing advanced functions, it is commonly the case that the OS treats each of the plurality of intricate and affined subroutine programs structuring the AP as separate tasks. This is a so-called multithread AP. Thus, in the disclosed task scheduling device mentioned above, a plurality of affined tasks belonging to the same multithread AP are treated as a task group, and each task group is provided with a predetermined time period within which to be executed. Furthermore, United States patent publication no.5745778 discloses technology for allocating CPU processing time based a hierarchical structure involving threads and thread groups.

Although, as described above, the conventional technology is capable of allocating a predetermined time period for the execution a plurality of tasks collected into a task group, it is, however, not always the case that the allocated execution period is properly distributed among each of the tasks included in the task group.

Consider an example in which an execution period is allocated to a task group that includes a task A and a task B. Tasks A and B have the same priority level and ought to be distributed equal time periods within which to be executed. However, when tasks A and B are simply executed alternately in the stated order based on a predetermined time period, a problem may arise if the execution period allocated to the task group continually runs out before the predetermined time period distributed to task A or task B has elapsed. In the long term, task A will end up being executed for longer than task B, and thus the equal distribution of the predetermined time period to each of the tasks in the task group will not be realized.

### SUMMARY OF THE INVENTION

In view of the above issue, a first object of the present invention is to provide a task scheduling device that improves the task scheduling of tasks and task groups by distributing appropriate time periods for the execution of each task.

Here, when a high priority task that should be executed promptly requires a system resource being held by a task in a low priority task group, the high priority task may have to wait for an extended period for the system resource to be released, and therefore the prompt execution of the task may not be realized.

In view of this issue, a second object of the present invention is to provide a task scheduling device that further improves the task scheduling of tasks and task groups by shortening the time period that a task having a high priority level must wait for the release of a system resource being held by a task in a task group having a low priority level.

A task scheduling device provided to achieve the first object sequentially specifies, from a plurality of tasks, one task at a time to be executed by a task execution unit, and includes a selecting unit for (i) sequentially selecting, based on a priority level of each of a plurality of task groups that include one or more tasks, each task group, and (ii) performing, on task groups having the same priority level, the sequential selecting on a round-robin basis using a timeslice value set for each of the task groups; and a specifying unit for (i) sequentially specifying, based on a priority level of each task included in a task group selected by the selecting unit, each task as the task to be executed by the task execution unit, and (ii) performing, on tasks in the task group having the same priority level, the sequential specifying on a round-robin basis using a timeslice value set for each of the tasks.

According to this structure, task scheduling that reflects the priority relationship between tasks and task groups is possible. Also, by appropriately setting the timeslice values in advance based on the relative urgencies of tasks and task groups, it becomes possible, to a certain extent, for each task to be executed according to an appropriately distributed time period. Furthermore, for example, by treating either a plurality of affined APs or an AP structured from a plurality of threads for achieving a certain objective as a single task group, and by setting the priority level of each task group in accordance with the objective of the affined APs or the AP structured from the plurality of threads, the task groups can be executed smoothly in accordance with their respective objectives, and the priority level of each task structuring a task group can be readily determined. Furthermore, since the priority levels of the tasks in a task group can be determined without needing to consider the processing content of other task groups, the design of a service system structured from a plurality of tasks can be more easily realized.

Here, when, from a time of the selecting of a task group, a time period shown by a timeslice value of the task group elapses, the selecting unit may perform the sequential selecting on the round-robin basis by selecting another task group having the same priority level as the task group; when, from a time of the specifying of a task, a time period shown by a timeslice value of the task elapses, the specifying unit may perform the sequential specifying on the round-robin basis by specifying another task having the same priority level as the task; and if, from a time of the specifying of a task, a different task group to a task group including the task is selected before a time period shown by a timeslice value of the task elapses, the specifying unit may perform the sequential specifying next time the task is specified by specifying another task when a difference period, rather than the time period shown by the timeslice value of the task, elapses, the difference period being the difference between (i) the time period shown by the timeslice value of the task and (ii) the time period from the specifying of the task until the selecting of the other task group.

According to this structure, even if the task group targeted for execution is switched during the execution of a task in the task group, each task will in the long term be executed in accordance with its corresponding timeslice value. This is because the next time the task that was being executed is specified for execution, the task will be executed, not for the entire time period corresponding to the timeslice value of the task, but for only the portion of the timeslice value remaining when the task group that includes the task was switched. In other words, irrespective of the timing at which the execution target is switched in task group units, the execution periods distributed to the tasks in a task group are maintained in proper order. Furthermore, since the timeslice value of a task group is no longer required to be the sum of the individual timeslice values of the tasks included in the task group, greater freedom is provided in the design of a service system structured from a plurality of tasks.

Here, the task scheduling device may include a main ready queue, being a memory area for storing identifiers that identify the task groups; a main ready queue setting unit for setting in order of priority in the main ready queue, the identifiers of task groups that includes one or more tasks in an executable state; a plurality of auxiliary ready queues, being memory areas that correspond one-to-one with the plurality of task groups, each auxiliary ready queue storing identifiers that identify the tasks included in a task group corresponding to the auxiliary ready queue; an auxiliary ready queue setting unit for setting in order of priority in each auxiliary ready queue that corresponds to a task group, the identifiers of tasks in the task group that are in an executable state; a first clocking unit for clocking an elapsed period from the selecting by the selecting unit; and a second clocking unit for clocking an elapsed period from the specifying by the specifying unit; and the selecting unit may select a task group identified by an identifier at a head of the main ready queue, and when a time period shown by a timeslice value of the task group is clocked by the first clocking unit as having elapsed, the selecting unit may remove the identifier of the task group from the main ready queue, and reset the removed identifier in the main ready queue via the main ready queue setting unit; the specifying unit may specify a task identified by an identifier at a head of the auxiliary ready queue corresponding to the task group selected by the selecting unit, and when a time period shown by a timeslice value of the task is clocked by the second clocking ,unit as having elapsed, the specifying unit may remove the identifier of the task from the auxiliary ready queue, and reset the removed identifier in the auxiliary ready queue via the auxiliary ready queue setting unit; and if, from a time of the specifying of a task, a different task group to a task group including the task is selected by the selecting unit before a time period shown by a timeslice value of the task is clocked by the second clocking unit as having elapsed, the specifying unit may save the elapsed period clocked by the second clocking unit up until the selecting of the different task group, and next time the task is specified, the specifying unit may perform the removing and resetting of the identifier of the task when a difference period, rather than the time period shown by the timeslice value of the task, is clocked by the second clocking unit as having elapsed, the difference period being the difference between (i) the time period shown by the timeslice value of the task and (ii) the saved elapsed period.

According to this comparatively simple structure, it is possible to realize priority level scheduling on a round-robin basis that incorporates a hierarchical structure comprising the two levels of task and task group.

Here, the task scheduling device may further include the task execution unit for executing a task specified by the specifying unit.

According to this structure, each task is executed while maintaining the time periods distributed to the tasks.

Here, the task scheduling device may further include a system resource-waiting detection unit for detecting when a task specified by the specifying unit is placed in a system resource-waiting state during execution, and for specifying the system resource; a system resource-holding task detection unit for detecting a task that is holding the system resource specified by the system resource-waiting detection unit; and a priority level changing unit for changing to a higher level the priority level of a task group that includes the detected task.

This structure allows for the second object to be achieved. In other words, this structure increases the chances of shortening the time period that a high priority task (i.e. requiring urgent execution) must wait for the release of a system resource being held by a task included in a low priority task group.

Here, the task scheduling device may include an original priority level storage unit, being a memory area for storing a value as an original priority level; and when the priority level of the task group that includes the detected task is changed to the higher level, the priority level changing unit may store in the original priority level storage unit as the original priority level, the priority level of the task group prior to the change; and the task scheduling device may further include a system resource-release detection unit for detecting the release, by the detected task, of the system resource specified by the system resource-waiting detection unit; and a priority level restoring unit for, when the release of the specified system resource is detected by the system resource-release detection unit, restoring the priority level of the task group that includes the detected task to the value stored in the original priority level storage unit.

According to this structure, the priority level of a task group that was raised in order to secure the release of a system resource, is returned to its original level after the system resource has been released. As a result, the priority levels set in advance for each of the task groups can be maintained over the long term.

The first object may alternatively be achieved by a task scheduling device that sequentially specifies, from a plurality of tasks, one task at a time to be executed by a task execution unit, and that includes a selecting unit for (i) sequentially selecting, based on a priority level of each of one or more task groups that include one or more tasks and a priority level of each of one or more independent tasks that are not included in any task group, each task group and each independent task, (ii) performing, on task groups and independent tasks having the same priority level, the sequential selecting on a round-robin basis using a timeslice value set for each of the task groups and each of the independent tasks, and (iii) specifying, if an independent task is selected by the selecting unit, the independent task as the task to be executed by the task execution unit; and a specifying unit for, if a task group is selected by the selecting unit, (i) sequentially specifying, based on a priority level of each task included in the task group, each task as the task to be executed by the task execution unit, and (ii) performing, on tasks in the task group having the same priority level, the sequential specifying on a round-robin basis using a timeslice value set for each of the tasks.

According to this structure, priority level scheduling on a round-robin basis that incorporates a two level hierarchical structure can be realized. Here, the first level consists of independent tasks and task groups, and the second level consists of the tasks structuring the task groups. An intricate control of the task scheduling can thus be realized, and as a result it becomes possible, to a certain extent, for each task to be executed according to an appropriately distributed time period.

Here, when, from a time of the selecting of a task group or an independent task, a time period shown by a timeslice value of the task group or the independent task elapses, the selecting unit may perform the sequential selecting on the round-robin basis by selecting another task group or another independent task having the same priority level as the task group or the independent task; when, from a time of the specifying of a task, a time period shown by a timeslice value of the task elapses, the specifying unit performs the sequential specifying on the round-robin basis by specifying another task having the same priority level as the task; and if, from a time of the specifying of a task, a different task group to a task group including the task is selected before a time period shown by a timeslice value of the task elapses, the specifying unit may perform the sequential specifying next time the task is specified by specifying another task when a difference period, rather than the time period shown by the timeslice value of the task, elapses, the difference period being the difference between (i) the time period shown by the timeslice value of the task and (ii) the time period from the specifying of the task until the selecting of the other task group.

According to this structure, the time periods distributed for the execution of each task in a task group are maintained in proper order, irrespective of the timing at which the execution target is switched in task group units and/or individual task units.

Here, the task scheduling device may further include a system resource-waiting detection unit for detecting when a task specified by the specifying unit is placed in a system resource-waiting state during execution, and for specifying the system resource; a system resource-holding task detection unit for detecting a task that is holding the system resource specified by the system resource-waiting detection unit; and a priority level changing unit for changing to a higher level the priority level of a task group that includes the detected task.

This structure increases the possibility of shortening the time period that a high priority task (i.e. requiring urgent execution) must wait for the release of a system resource being held by a task included in a low priority task group.

The first object may alternatively be achieved by a task scheduling method that sequentially specifies, from a plurality of tasks, one task at a time to be executed in a computer by a task execution unit, and that includes a selecting, step of (i) sequentially selecting, based on a priority level of each of a plurality of task groups that include one or more tasks, each task group, and (ii) performing, on task groups having the same priority level, the sequential selecting on a round-robin basis using a timeslice value set for each of the task groups; and a specifying step of (i) sequentially specifying, based on a priority level of each task included in a task group selected in the selecting step, each task as the task to be executed by the task execution unit, and (ii) performing, on tasks in the task group having the same priority level, the sequential specifying on a round-robin basis using a timeslice value set for each of the tasks.

The first object may alternatively be achieved by a task scheduling method that sequentially specifies, from a plurality of tasks, one task at a time to be executed in a computer by a task execution unit, and that includes a selecting step of (i) sequentially selecting, based on a priority level of each of one or more task groups that include one or more tasks and a priority level of each of one or more independent tasks that are not included in any task group, each task group and each independent task, (ii) performing, on task groups and independent tasks having the same priority level, the sequential selecting on a round-robin basis using a timeslice value set for each of the task groups and each of the independent tasks, and (iii) specifying, if an independent task is selected in the selecting step, the independent task as the task to be executed by the task execution unit; and a specifying step of, if a task group is selected in the selecting step, (i) sequentially specifying, based on a priority level of each task included in the task group, each task as the task to be executed by the task execution unit, and (ii) performing, on tasks in the task group having the same priority level, the sequential specifying on a round-robin basis using a timeslice value set for each of the tasks.

### BRIEF DESCRIPTION OF THE DRAWINGS

These and other objects, advantages and features of the invention will become apparent from the following description thereof taken in conjunction with the accompanying drawings that illustrate specific embodiments of the present invention.

In the drawings:
- Fig.1: is a functional block diagram of a task scheduling device 100 according to an embodiment 1 of the present invention;
- Fig.2: shows a data structure of task control information, and additionally shows, in grid form, an exemplary content of the task control information;
- Fig.3: shows an exemplary content of ready queues stored in a ready queue storage unit 121;
- Fig.4: is a flowchart showing a ready queue entry processing operation performed by a ready queue entry unit 120;
- Fig.5: is a flowchart showing an execution task switching control processing operation performed by task scheduling device 100;
- Fig.6: is a flowchart showing a priority level temporary change processing operation performed by task scheduling device 100;
- Fig.7: shows, in grid form, an exemplary content of the task control information after a priority level has been temporality changed;
- Fig.8: is a timechart showing the execution periods of tasks executed as a result of scheduling performed by task scheduling device 100;
- Fig.9: is a functional block diagram of a task scheduling device 400 according to an embodiment 2 of the present invention;
- Fig.10: shows a data structure of task control information generated by a task control information generation unit 410,and stored in a control information storage unit 411, and additionally shows, in grid form, an exemplary content of the task control information;
- Fig.11: shows an exemplary content of ready queues stored in ready queue storage unit 121;
- Fig.12: is a flowchart showing an execution task switching control processing operation performed by task scheduling device 400;
- Fig.13: is a timechart showing the execution periods of tasks executed as a result of scheduling performed by task scheduling device 400;
- Fig.14: is a functional block diagram of an exemplary prior art task scheduling device;
- Fig.15: shows an exemplary content of a ready queue 950 in the prior art task scheduling device;
- Fig.16: shows an exemplary content of a timeslice table in the prior art task scheduling device; and
- Fig.17: is a timechart showing the execution periods of tasks executed as a result of scheduling performed by the prior art task scheduling device.

### DETAILED DESCRIPTION OF THE PREFERRED EMBODIMENTS

The following description relates to the embodiments of a task scheduling device according to the present invention.

### 1. Embodiment 1

### 1-1. Structure

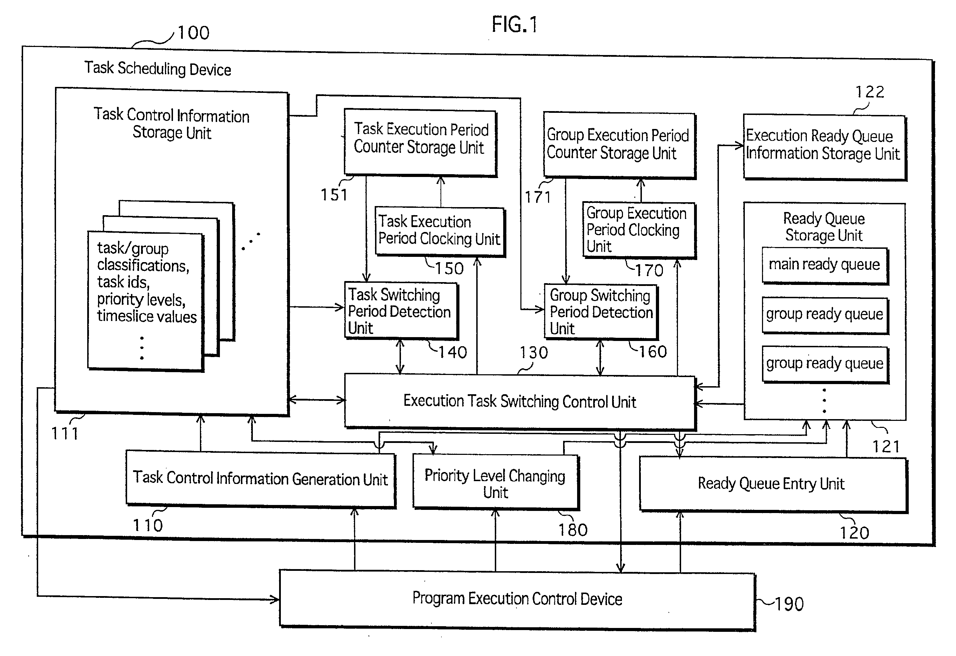

Fig.1 is a functional block diagram of a task scheduling device 100 according to an embodiment 1 of the present invention.

Task scheduling device 100 corresponds to a part of an operating system (OS) of a computer and performs task scheduling based on a priority level system that incorporates a round-robin format, the task scheduling performed by device 100 being preconditioned on the collection of tasks into groups. The functions of device 100 are realized by the execution of a predetermined control program stored in memory, the CPU that executes the program being included in a computer or a similar device having a memory and a program execution function. That is, the functions of device 100 are realized by the use of software. Device 100 is characterized by the capacity to temporarily raise the priority level of a task having a low priority level when the low priority task is currently using a system resource required by a task having a high priority level.

From a functional aspect, task scheduling device 100 includes, as shown in Fig.1, a task control information generation unit 110, a task control information storage unit 111, a ready queue entry unit 120, a ready queue storage unit 121, an execution ready queue information storage unit 122, an execution task switching control unit 130, a task switching period detection unit 140, a task execution period counting unit 150, a task execution period counter storage unit 151, a group switching period detection unit 160, a group execution period counting unit 170, a group execution period counter storage unit 171, and a priority level changing unit 180. Device 100 operates in liaison with a program execution control device 190, which corresponds to a part of the OS.

Here, the functions of program execution control device 190 include (a) executing application programs (APs), (b) requesting the generation of task control information, and (c) controlling the condition of tasks. These three functions will now be described in detail.

Function (a): When instructed to execute a task by task scheduling device 100, program execution control device 190 executes the relevant sections of an AP corresponding to the task. If the task to which AP corresponds has already undergone execution processing one or more times, device 190 saves the so-called program counter and continues the execution of the task from the address at the completion of the previous execution processing. Furthermore, if system resources such as hardware resources and data files are being held or have been released by an AP, device 190 notifies task scheduling device 100 of this fact.

Function (b): If program execution control device 190 (i) boots an AP in response to, for example, information in one,or more APs or information inputted by an operator, or (ii) instructs that an AP generate a thread; that is, requests the execution of a partial program as a new task, or if (iii) an operator instructs, for example, the collection of tasks into groups, then device 190 sends a request to task control information generation unit 110 to generate task control information in task units or task group units. Here, the collection of a plurality of tasks together into a group forms what is known as a "task group".

Function (c): When an operator instructs the booting of an AP, program execution control device 190 sends a request to ready queue entry unit 120 to make an entry into the ready queue of the task corresponding to the AP. Also, when an input/output command or the like is issued during the execution of an AP, device 190 controls the relevant hardware and places the corresponding task in a waiting-state. When the task is returned to an executable-state by the issuing of an interrupt notification from the hardware showing that the input/output has been completed, device 190 sends a request to ready queue entry unit 120 to make an entry into the ready queue of the task corresponding to the AP. If execution of the task is completed, or if the task changes from an executable-state to a waiting-state, device 190 notifies task scheduling device 100 that execution of the task has been stopped.

Here, it should be noted that when a task being executed reverts to a non-executable state because of having to wait for a system resource being held by another task, program execution control device 190 first notifies task scheduling device 100 that the execution of the task has been stopped, before then notifying device 100 that the task is waiting for a system resource and showing device 100 the ID of the system resource.

Task control information generation unit 110 functions as follows. When a request to generate task control information is received from program execution control device 190, unit 110 generates the requested task control information, and stores the generated task control information in task control information storage unit 111, which is an area in memory. If the request to generate task control information relates to a task group, unit 110, in addition to generating the requested task control information, allocates an area for storing a group ready queue in ready queue storage unit 121, which is an area in memory.

Task control information corresponds to what is commonly referred to as a task control block (TCB), and includes information such as task IDs, group IDs, timeslice values, priority levels, and the IDs of system resources currently in use. Each of the above will be described in detail in a later section. Hereafter, when task control information is used collectively to refer to both tasks and task groups, "task ID" should be understood to also include "group ID".

Task control information generation unit 110 also performs the following functions. When notified by program execution control device 190 that a system resource is being held or has been released, unit 110 updates the ID of the system resource in the task control information.

Ready queue storage unit 121 is an area in memory, and a main ready queue is stored therein in advance. Also, when an area for storing one or more group ready queues has been allocated in unit 121 by task control information generation unit 110, unit 121 stores these group ready queues. The main ready queue and the one or more group ready queues are areas for storing, in order of priority, the IDs of tasks in an executable-state. A detailed description of these two types of ready queues is given in a later section.

Ready queue entry unit 120 stores, in a ready queue in order of execution, task IDs specified by program execution control device 190 or execution task switching control unit 130. When a task ID is stored in a ready queue, unit 120 stores, as a single element of the ready queue, a combination of the task ID and information showing the priority level of the task. Hereafter, the storage of a task ID in a ready queue will be referred to as "entering a task" in a ready queue.

Execution ready queue information storage unit 122 is an area in memory for storing information, such as a pointer, indicating which of the ready queues is currently targeted for execution. Unit 122 is used by execution task switching control unit 130. Hereafter, information saved in unit 122 will be referred to as an "execution ready queue".

Task execution period counter storage unit 151 is an area in memory for saving a count value (hereafter, "task execution period counter") showing the continuous execution period of a task currently being executed. The task execution period counter is incremented by task execution period counting unit 150 in accordance with the elapse of time. The task execution period counter may, for example, be expressed in units such as clock ticks.

Task execution period counting unit 150 functions as follows. When an instruction is received to start the counting, unit 150 firstly resets the task execution period counter to zero, and then starts incrementing the task execution period counter. When an instruction is received to stop the counting, unit 150 stops incrementing the task execution period counter.

Task switching period detection unit 140 functions as follows. When notified by execution task switching control unit 130 of the ID of a task to be executed, unit 140 refers, based on the notified task ID, to the task control information of the task and obtains a timeslice value corresponding to the task. Unit 140 then repeatedly compares the task execution period counter with the obtained timeslice value, stops the comparing when the count value is detected as equaling the timeslice value, and notifies unit 130 that the execution period of the task has elapsed. This function is conducted by unit 140 for all timeslice values except a "-1" value, which shows that restrictions do not apply to the continuous execution period of a corresponding task.

Group execution period counter storage unit 171 is an area in memory for storing a count value (hereafter, "group execution period counter") showing the continuous execution period of a task group currently targeted for execution. The group execution period counter is incremented by unit 171 in accordance with the elapse of time, and is expressed in the same units of measurement as the task execution period counter (e.g. clock ticks).

Group execution period counting unit 170 functions as follows. When an instruction is received to start the counting, unit 170 firstly sets the group execution period counter to zero, and then starts incrementing the group execution period counter. When an instruction is received to stop the counting, unit 170 stops incrementing the group execution period counter.

Group switching period detection unit 160 functions as follows. When notified by execution task switching control unit 130 of the ID of a task group corresponding to a group ready queue indicated by the execution ready queue, unit 160 refers to the task control information of the group based on the notified group ID, and obtains a timeslice value corresponding to the group. Unit 160 then repeatedly compares the group execution period counter with the obtained timeslice value, stops the comparing when the count value is detected as equaling the timeslice value, and notifies unit 130 that the execution period of the task group has elapsed. This function is conducted by unit 160 for all timeslice values except a "-1" value, which shows that restrictions do not apply to the continuous execution period of a corresponding task group.

Execution task switching control unit 130 functions, in general, to refer to each of the ready queues and to control the switching of the task to be executed.

Specifically, when (i) notified by task switching period detection unit 140 that a task execution period has elapsed, or (ii) notified by group switching period detection unit 160 that a group execution period has elapsed, or (iii) when a change in the head element of the main ready queue or a ready queue indicated by the execution ready queue is detected, execution task switching control unit 130 instructs program execution control device 190 to stop the execution of the task currently being executed, specifies a task identified by the task ID included in the element at the head of the ready queue as the next task to be executed, and instructs device 190 to start the execution of the specified task. Furthermore, when notified by device 190 that execution of a task has been stopped, unit 130 removes the head element from the ready queue, specifies a task identified by the task ID included in the element now at the head of the ready queue as the next task to be executed, and instructs device 190 to start the execution of the specified task.

Furthermore, in order to control the switching of tasks to be executed, execution task switching control unit 130, depending, on the situation, refers to the task control information, refers to and updates the content of execution ready queue information storage unit 122, instructs task execution period counting unit 150 or group execution period counting unit 170 to start or stop the counting, notifies task switching period detection unit 140 of a task ID, notifies group switching period detection unit 160 of a group ID, and reenters a task or task group into a ready queue stored in ready queue entry unit 120.

Priority level changing unit 180 functions as follows. When notified by program execution control device 190 that a system resource-waiting condition has occurred, unit 180 temporarily changes the priority level of the task or task group holding the system resource. This processing operation, hereafter referred to as "priority level temporary change processing", is described in detail in a later section.

### 1-2 Data

The following description relates to the task control information stored in task control information storage unit 111.

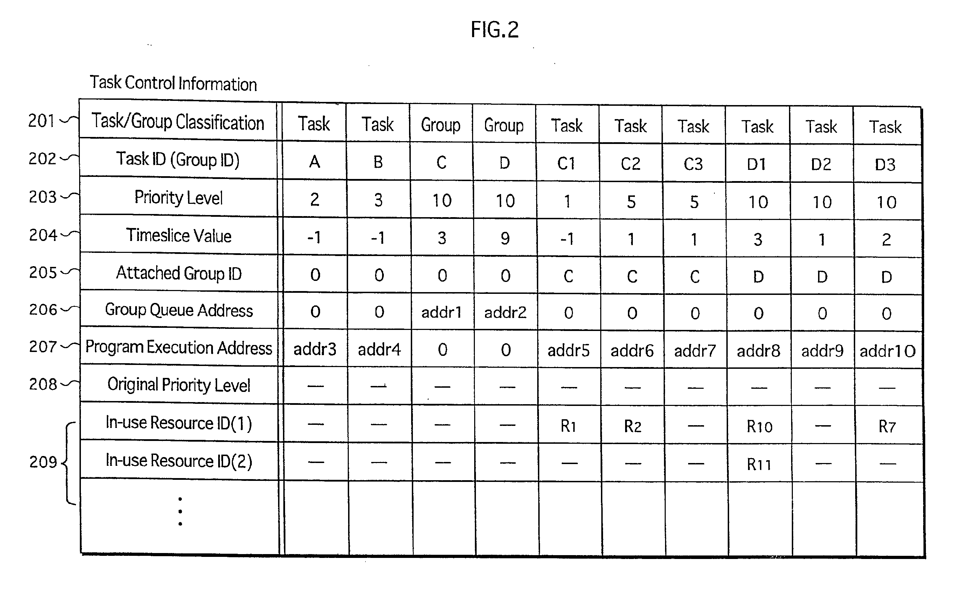

Fig.2 shows a data structure of the task control information, and additionally shows, in grid form, an exemplary content of the task control information.

Task control information is information that exists for each of the tasks and task groups, and as shown in Fig.2, is structured to include a task/group classification 201, a task ID (group ID) 202, a priority level 203, a timeslice value 204, an attached group ID 205, a group queue address 206, a program execution address 207, an original priority level 208, and an in-use resource ID 209.

Here, task/group classification 201 is information showing whether the task control information relates to a task or a task group.

Task ID (group ID) 202 is information identifying a task (or a task group).

Priority level 203 shows the priority level of a task or a task group, and may, for example, take any value in a range from 1 to 16. Here, the lower the number, the higher the priority level. Task groups as well as tasks not attached to a task group are executed in order of priority; that is, beginning with the low numbers shown in priority level 203. Furthermore, tasks attached to a task group are executed in order of priority within the task group. Here, the "execution of a task group" refers to the execution of the one or more tasks structuring the task group.

Timeslice value 204 shows the upper limit value of a period of permitted continuous execution relating to a task or a task, group. This value is measured in the same units used for the task execution period counter, and therefore may, for example, be expressed in clock ticks. Furthermore, a value of "-1" shows that no restrictions apply to the continuous execution period of a corresponding task or task group.

The timeslice value of a task group shows the upper limit value of a time period for executing the tasks structuring the task group, and the switching of the task being executed in the task group is conducted within the time period corresponding to this timeslice value.

Attached group ID 205 shows the ID of a task group to which a task shown in the task control information is attached (i.e. if the task is attached to a task group). Attached group ID 205 does not apply to tasks that are not attached to task groups, and therefore takes a "0" (NULL) value, for example, with respect to these tasks.

Group queue address 206 shows, in task control information relating to task groups, the address of group ready queues allocated for the task groups. Group queue address 206 does not apply to task control information relating to tasks, and therefore takes a "0" (NULL) value, for example, with respect to these tasks.

Program execution address 207 shows, in task control information relating to tasks, the address of tasks targeted for execution by program execution control device 190. Program execution address 207 does not apply to task control information relating to task groups, and therefore takes a "0" (NULL) value, for example, with respect to task groups.

Original priority level 208 is information used for saving the original priority level of a task or task group whose priority level undergoes priority level temporary change processing. As such, original priority level 208 does not apply when priority level temporary change processing is not being performed. Original priority level 208 is set and referred to by priority level changing unit 180.

In-use resource ID 209 is information showing a resource ID identifying a system resource currently being held by a task. In-use resource ID 209 may be of variable length, and when a plurality of system resources are being held, in-use resource ID 209 may show a plurality of resource IDs.

Task control information is generated by task control information generation unit 110 based on a request by program execution control device 190. Device 190 requests the generation of task control information after firstly obtaining, by an operator input operation, for example, all the information necessary for generating the task control information, and transferring the obtained information to unit 110. If the priority levels and timeslice values are set in advance in the data unit or boot control information of an AP, device 190 may request the generation of task control information when an AP boot instruction is received from an operator, by providing the AP with a task ID and transferring the task ID to unit 110 together with the priority level and timeslice value set in the AP. Alternatively, if the AP is structured from a plurality of threads, device 190 may request the generation of task control information when an AP boot instruction is received from an operator, by treating the AP as a task group and the individual threads as tasks attached to the task group, and transferring to unit 110 all the information necessary to generate the task control information.

The information received by task control information generation unit 110 from program execution control device 190 basically includes the following: information distinguishing between a task and a group, a task ID (or a group ID), a priority level, a timeslice value, the group ID of an attached task group (if the task is attached to a task group), and an execution address. Based on the request received from device 190, unit 110 then generates the task control information. In the generation of task control information for a task group, unit 110 not only allocates an area in ready queue storage unit 121 for storing the group ready queue of the task group, but also sets in group queue address 206 a pointer that indicates the allocated area.

Furthermore, when notified by program execution control device 190 of the holding or release of a system resource, task control information generation unit 110 updates in-use resource ID 209 in accordance with the notification. Here, in-use resource ID 209 is referred to by priority level changing unit 180.

The exemplary content in Fig.2 shows task A, task B, tasks C1, C2, and C3 structuring task group C, and tasks D1, D2, and D3 structuring task group D as being in an executable-state. Here, the timeslice values are shown in predetermined clock tick units.

In the given example, task A has the highest priority level (i.e. "2"), followed by task B (i.e. "3"), and then task groups C and D, which both have the same priority level (i.e. "10") and timeslice values of "3" and "9", respectively. After the execution of tasks A and B has been completed, task groups C and D are executed alternately in accordance with their respective timeslice values. Thus, over an extended period of time, the ratio of the execution periods provided for all of the tasks collected in task group C and all of the tasks collected in task group D is substantially 3:9.

Furthermore, in task group C, task C1 has the highest priority level (i.e. "1"), followed by tasks C2 and C3 having the same priority level (i.e. "5"), and equal timeslice values of "1". In task group D, tasks D1, D2, and D3 all have the same priority level (i.e. "10"), and timeslice values of "3", "1", and "2", respectively.

As shown in the exemplary content of Fig.2, task D1 is currently holding system resources identified by the resource IDs "R10" and "R11".

The ready queues stored in ready queue storage unit 121 will now be described.

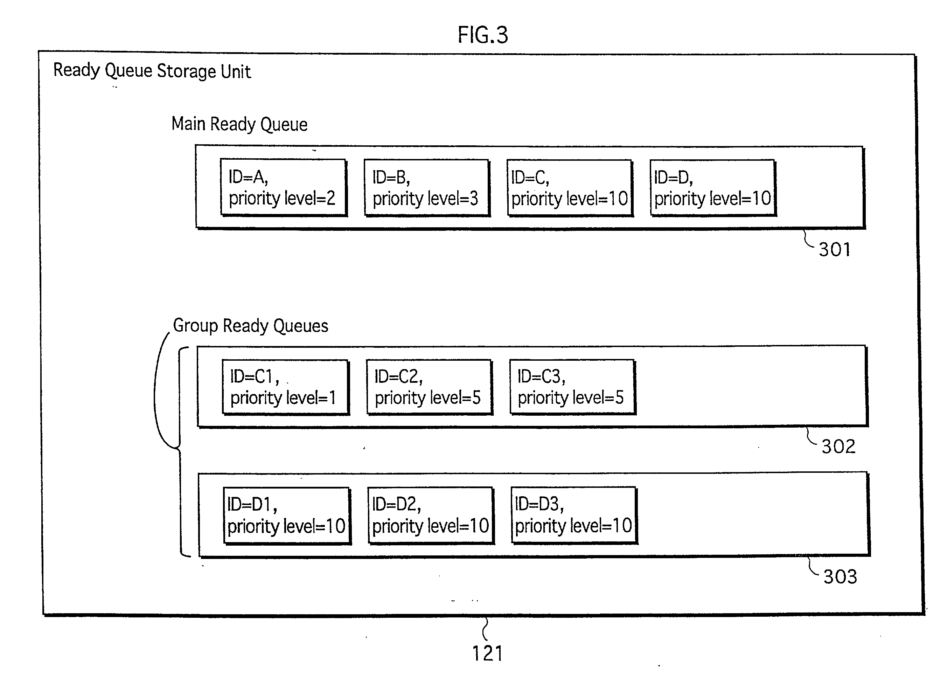

Fig.3 shows an exemplary content of the ready queues stored in ready queue storage unit 121.

Ready queue storage unit 121 stores a main ready queue in advance, and may also store one or more group ready queues provided by task control information generation unit 110. The exemplary content in Fig.3 corresponds to the exemplary task control information in Fig.2.

A ready queue includes a plurality of elements, and each element is a combination of a task ID and a priority level. Task groups as well as independent tasks not attached to a task group may be entered into the main ready queue, while tasks structuring a task group may be entered into a group ready queue corresponding to the task group.

As shown in Fig.3, task A, task B, task group C and task group D have been entered into a main ready queue 301. Also, tasks C1, C2, and C3 have been entered into a group ready queue 302 corresponding to task group C, and tasks D1, D2, and D3 have been entered into a group ready queue 303 corresponding to task group D. The head of each ready queue is to the left, and the elements in the ready queues are always stored in order of priority by ready queue entry unit 120 or priority level changing unit 180.

### 1-3 Operations

The following description relates to the operations performed by task scheduling device 100. Device 100 has the structure described above and performs operations based on the task control information and ready queues described above.

Firstly, when (i) an AP is booted, or (ii) an AP requests the execution of a partial program as a new task, or (iii) an operator instructs the collection of tasks into groups, task control information generation unit 110 receives a request from program execution control device 190, generates task control information relating to a task or task group, and allocates an area in ready queue- storage unit 121 for storing a group ready queue if the generated task control information relates to a task group.

When an AP is booted, program execution control device 190 requests ready queue entry unit 120 to enter the task corresponding to the AP into the appropriate ready queue. Also, when a task placed in a waiting-state is returned to an executable-state, device 190 requests ready queue entry unit 120 to enter the task into the appropriate ready queue. On receipt of one of the above requests from device 190, ready queue entry unit 120 performs a ready queue entry processing operation (described below).

Ready queue entry unit 120 also performs the ready queue entry processing when a request to enter a task or task group into a ready queue is made by execution task switching control unit 130. Here, device 190 and unit 130 request a ready queue entry by specifying a task ID or a group ID.

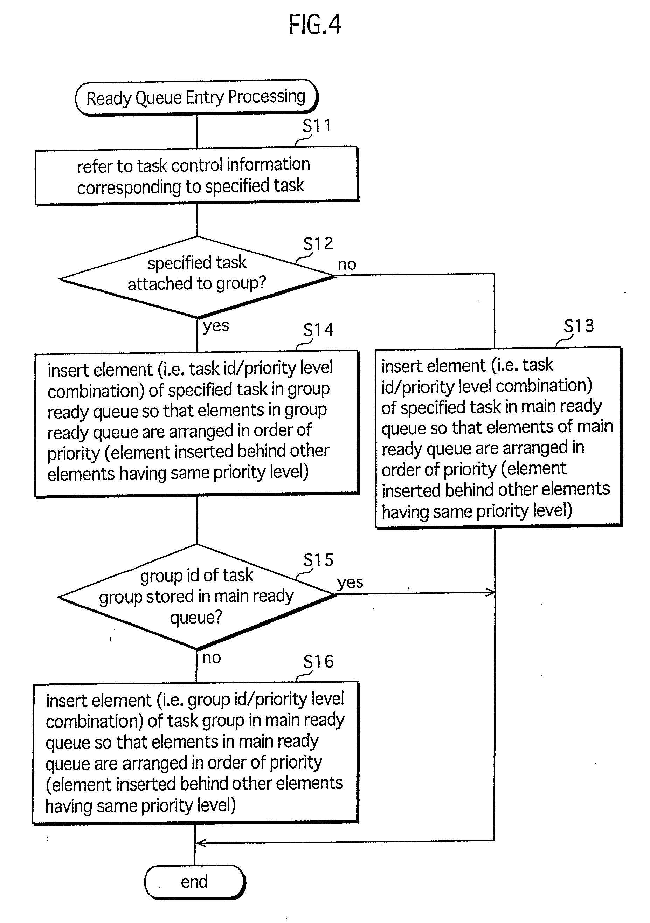

Fig.4 is a flowchart showing the ready queue entry processing performed by ready queue entry unit 120. This processing will now be described in detail.

Firstly, ready queue entry unit 120 refers to the task control information corresponding to the task (or task group) to which the entry request relates by conducting a search based the task ID notified together with the entry request (step S11), and based on attached group ID 205 in the corresponding task control information, judges whether the specified task is attached to a task group (step S12).

If the specified task is judged to not be attached to a task group (step S12 = "no"), ready queue entry unit 120 inserts an element (i.e. combination of ID and priority level of specified task) into the main ready queue so that the elements in the main ready queue are arranged in order of priority (step S13), and terminates the ready queue entry processing. In the event that a task group rather than a task is specified, ready queue entry unit 120 inserts an element (i.e. combination of ID and priority level of specified task group) into the main ready queue in the same manner as described above for a task.

Let us assume, for example, that in the step 13 processing, the element is inserted at the end (i.e. last position) of the main ready queue. In this case, ready queue entry unit 120 judges comparatively whether the priority level of the element one position ahead of the inserted element in the main ready queue is lower than the priority level of the inserted element. If lower, unit 120 exchanges the positions of the two elements, again judges comparatively whether the priority level of the element one position ahead of the inserted element is lower than the priority level of the inserted element, and again exchanges their respective positions, if lower. This process is repeated until the priority level of the element one position ahead is equal to or higher than the priority level of the inserted element.

In the step 12 judgment, if the specified task is judged to be attached to a task group (step S12 = "yes"), ready queue entry unit 120 refers to group queue address 206 of the task group identified by the group ID shown in attached group ID 205 of the specified task, and enters the specified task into the group ready queue of the identified task group (step S14).

Here, ready queue entry unit 120 inserts an element (i.e. combination of ID and priority level of specified task) into the corresponding group ready queue so that the elements in the group ready queue are arranged in order of priority. Also, as in step 13, if an element having the same priority level as the new element already exists in the group ready queue, unit 120 inserts the new element behind the element having the same priority level.

Following step 14, ready queue entry unit 120 judges whether entry of the task group into the main ready queue has been completed (step S15). That is, unit 120 judges whether the group ID of the task group has been stored in the main ready queue.

If judged that entry of the task group has been completed (step S15 = "yes"), ready"queue entry unit 120 terminates the ready queue entry processing, and if judged that entry of the task group has not been completed (step S15 = "no") unit 120 enters the task group into the main ready queue (step S16), and terminates the processing.

Specifically, in step S16, ready queue entry unit 120 inserts an element (i.e. combination of ID and priority level of the task group) into the main ready queue so that the elements of the main ready queue are arranged in order of priority. Also, as in step 13, if an element having the same priority level as the new element already exists in the main ready queue, unit 120 inserts the new element behind the element having the same priority level. Thus completes the description of the ready queue entry processing.

Next, an execution task switching control processing operation performed by various units (execution task switching control unit 130 being central among these) in task scheduling device 100 will be described with reference to the ready queues in which tasks and task groups were entered by ready queue entry unit 120.

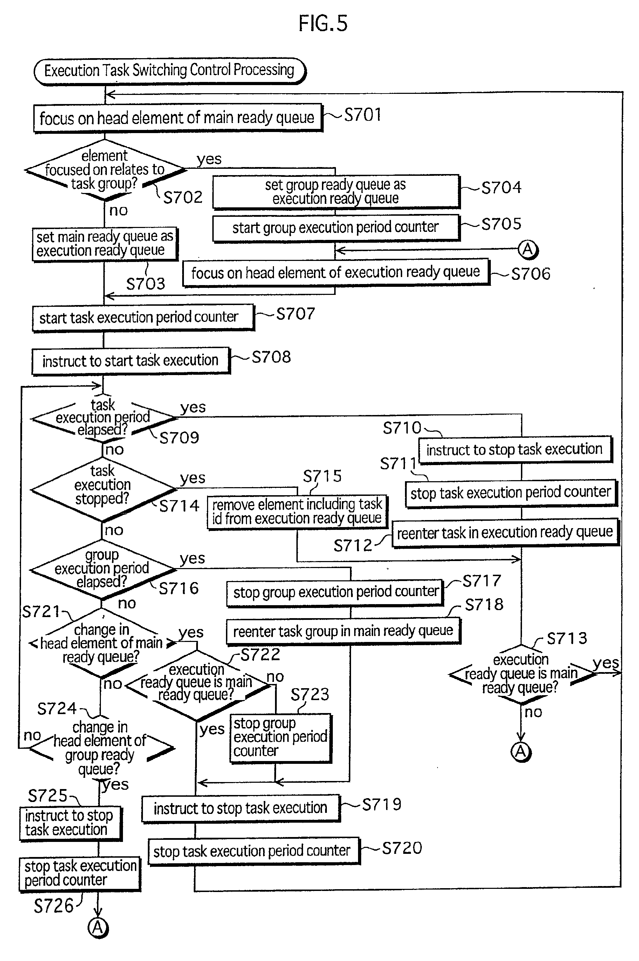

Fig.5 is a flowchart showing the execution task switching control processing performed by task scheduling device 100. This processing will now be described in detail.

Firstly, execution task switching control unit 130 focuses on the element at the head of the main ready queue (step S701), searches the task control information stored in task control information storage unit 111 for task control information corresponding to the ID (i.e. task ID or group ID) included in the element, and judges whether the element focused on in the main ready queue relates to a task group by referring to task/group classification 201 in the corresponding task control information (step S702).

If judged that the element focused on does not relate to a task group (step S702 = "no"; i.e. element focused on relates to a task), execution task switching control unit 130 sets the execution ready queue stored in execution ready queue information storage unit 122 to indicate the main ready queue (step S703).

On the other hand, if judged that the element focused on does relate to a task group (step S702 = "yes"), execution task switching control unit 130 sets the execution ready queue to indicate the group ready queue corresponding to the task group (step S704). That is, unit 130 sets in the execution ready queue the value shown in group queue address 206 of the task control information relating to the task group.

Following step S704, execution task switching control unit 130 instructs group execution period counting unit 170 to start the counting, and sends the group ID in the element focused on to group switching period detection unit 160. In response to this, unit 170 starts incrementing the group execution period counter, and unit 160 obtains the value of timeslice value 204 from the task control information of the task group identified by the group ID, and starts to repeatedly judge whether the group execution period counter equals the obtained timeslice value (step S705).

Following step S705, execution task switching control unit 130 focuses on the element at the head of the ready queue indicated by the execution ready queue (step S706).

Following step S703 or step S706, execution task switching control unit 130 instructs task execution period counting unit 150 to start the counting, and sends the task ID in the element last focused on (i.e. in step S701 or S706) to task switching period detection unit 140. In response to this, unit 150 starts incrementing the task execution period counter, and unit 140 obtains the value of timeslice value 204 from the task control information of the task identified by the task ID, and starts to repeatedly judge whether the task execution period counter equals the obtained timeslice value (step S705).

Following step S707, execution task switching control unit 130 sends the task ID included in the element last focused on to program execution control device 190, and instructs device 190 to start executing a program (step S708). In response to this, device 190 obtains program execution address 207 by referring to the task control information of the task identified by the task ID, and starts executing the program from the obtained address.

Following step S708, execution task switching control unit 130 judges whether the elapse of the task execution period has been notified by task switching period detection unit 140 (step S709). If judged that notification has not been received (step S709 = "no"), unit 130 judges whether the stopping of the task execution has been notified by program execution control device 190 (step S714). If judged that notification has not been received (step S714 = "no"), unit 130 judges whether the elapse of the task group execution period has been notified by group switching period detection unit 160 (step S716). If judged that notification has not been received (step S716 = "no") , unit 130 judges whether there has been a change in the head element of the main ready queue (step S721). In judges that there has not been a change (step S721 = "no"), unit 130 judges whether the execution ready queue indicates a group ready queue, and if "yes", whether there has been a change in the head element of the group ready queue (step S724).

Here, if notifications relating to (i) the stopping of the task execution, (ii) the elapse of the task group execution,period, and (iii) the elapse of the task execution period are issued at the same time, execution task switching control unit 130 treats these notifications as having been sent in the order stated here.

Also, in order to perform the judgments in steps S721 and S724, execution task switching control unit 130 temporarily saves in a memory area the task ID focused on, and compares the saved task ID with the task ID of the head element in the ready queue. Here, the steps S721 and S724 judgments are conducted because it is always a possibility that ready queue entry unit 120 will be requested by program execution control device 190 to make an entry of a new task having a high priority.

In the judgment in step S709, if judged that the elapsed of the task execution period has been notified by task switching period detection unit 140 (step S709 = "yes") , unit 130 instructs program execution control device 190 to stop the execution of the task (step S710), and in response to this, device 190 stops executing the program corresponding to the task . When the task execution has been stopped by device 190, unit 130 updates program execution address 207 in the task control information of the task so as to show the address from which the program is subsequently to be executed.

Following step S710, execution task switching control unit 130 instructs task execution period counting unit 150 to stop the counting, and in response to this, unit 150 stops incrementing the task execution period counter (step S711).

Following step S711, execution task switching control unit 130 removes, from the head of the ready queue indicated by the execution ready queue, the element that includes the task ID of the task whose execution was instructed to be stopped in step S710, and sends a request to ready queue entry unit 120 to reenter the task. In response to this, unit 120 performs the ready queue entry processing as shown in Fig.4, and as a result the task is entered into the ready queue indicated by the execution ready queue (step S712).

Following step S712, execution task switching control unit 130 judges whether the ready queue indicated by the execution ready queue is the main ready queue (step S713). Here, since the main ready queue is stored in advance in ready queue storage unit 121, step S713 is conducted by judging whether the execution ready queue indicates the constant address of the main ready queue.

If judged that the execution ready queue does indicate the main ready queue (step S713 = "yes"), execution task switching control unit 130 returns to step S701, focuses on the head element of the main ready queue, and performs the processing necessary to execute a new task. On the other hand, if judged,that the execution ready queue does not indicate the main ready queue (step S713 = "no"), execution task switching control unit 430 returns to step S706, focuses on the head element of the group ready queue indicated by the execution ready queue, and performs the processing necessary to execute a new task.

In the judgment in step S714, if judged that the stopping of the task execution has been notified by program execution control device 190 (step S714 = "yes"), unit 430 removes the head element (i.e. the element last focused on in S701 or S706) from the ready queue indicated by the execution ready queue (step S715), and moves on to step S713 (described above).

In the judgment in step S716, if judged that the elapse of the task group execution period has been notified by group switching period detection unit 160 (step S716 = "yes"), execution task switching control unit 130 instructs group execution period counting unit 170 to stop the counting, and in response to this, unit 170 stops incrementing the group execution period counter (step S717).

Following step S717, execution task switching control unit 130 removes the head element from the main ready queue, and sends a request to ready queue entry unit 120 to reenter into the main ready queue the task group identified by the group ID in the removed element. In response to this, unit 120 performs the ready queue entry processing shown in Fig.4, and as a result the task group is entered into the main ready queue (step S718).

Following step S718, execution task switching control unit 130 instructs program execution control device 190 to stop the execution of the task (step S719), and in response to this, device 190 stops executing the program corresponding to the task.

Following step S719, execution task switching control unit 130 instructs task execution period counting unit 150 to stop the counting, and in respond to this, unit 150 stops incrementing the task execution period counter (step S720).

Following step S720, unit 130 returns to step S701, focuses on the head element of the main ready queue, and performs the processing necessary to execute a new task.

In the judgment in step S721, if judged that there has been a change in the head element of the main ready queue (step S721 = "yes"), execution task switching control unit 130 judges whether the ready queue indicated by the execution ready queue is the main ready queue (step S722). If judged that the execution ready queue does not indicate the main ready queue (step S722 = "no"), unit 130 has group execution period counting unit 170 stop incrementing the group execution, period counter (step S723).

Following step S723 or if judged in step S722 that the execution ready queue does indicate the main ready queue (step S722 = "yes"), execution task switching control unit 130 instructs program execution control device 190 to stop the execution of the task (step S719), and has task execution period counting unit 150 stop incrementing the task execution period counter (step S720). Unit 130 then returns to step S701, focuses on the head element of the main ready queue, and performs the processing necessary to execute a new task.

In the judgment in step S724, if judged that the execution ready queue does indicate a group ready queue and that there has been a change in the head element of the group ready queue (step S724 = "yes"), execution task switching control unit 130 instructs program execution control device 190 to stop the execution of the task (step S725), and has task execution period counting unit 150 stop incrementing the task execution period counter (step S726). Unit 130 then returns to step S706, focuses on the head element of the group ready queue indicated by the execution ready queue, and performs the processing necessary to execute a new task.

On the other hand, if judged that the conditions of step S724 have not been fulfilled (step S724 = "no"), execution task switching control unit 130 returns to step S709, and judges whether the elapse of the task execution period has been notified by task switching period detection unit 140. Thus completes the description of the execution task switching control processing performed by task scheduling device 100.

The following description relates to the priority level temporary change processing performed by priority level changing unit 180.

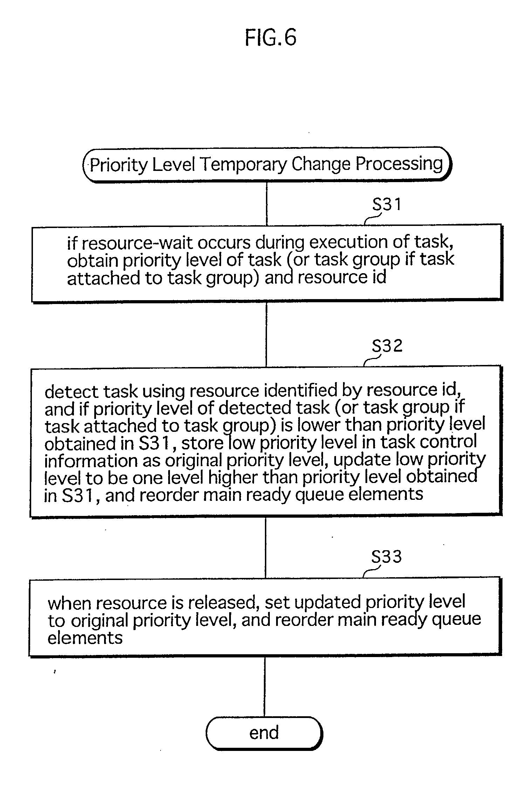

Fig.6 is a flowchart showing the priority level temporary change processing performed by priority level changing unit 180. This processing will now be described in detail.

If notified by program execution control device 190 that a system resource-waiting condition has occurred, priority level changing unit 180 obtains the resource ID shown in the notification and refers to the content of the ready queues stored in ready queue storage unit 121 and to the task control information stored in task control information storage unit 111 in order to obtain the priority level of a task currently being executed (step S31). Here, if the task currently being executed is attached to a task group, unit 180 obtains the priority level of the task group.

Next, priority level changing unit 180 detects the task currently using the system resource identified by the resource ID obtained in step S31 (i.e. the task shown in the task control information to be currently holding a system resource having the obtained resource ID), and judges whether the priority level of the detected task (or task group if the task is attached to a task group) is lower than the priority level obtained in step S31. If judged to be lower, unit 180 sets the priority level of the detected task (or task group to which the task is attached) as original priority level 208 in the task control information relating to the task (or task group), and sets priority level 203 in the task control information relating to the task (or task group) to show a priority level one level higher than the priority level obtained in step S31. Then, in accordance with the change in priority level 203, unit 180 rearranges the position in the main ready queue of the element relating to the task or task group whose priority level has been temporarily changed (step S32).

Although not depicted in Fig.6, if in step S32 a task holding the system resource identified by the resource ID obtained in step S31 is not detected (i.e. if the system resource is currently not useable for a reason other than because of being held by another task), priority level changing unit 180 aborts the priority level temporary change processing and performs no other processing related to changing the priority level of a task. Furthermore, if the task holding the system resource is in the same task group as the task waiting for the system resource, unit 180 again aborts the priority level temporary change processing and performs no other processing related to changing the priority level of the task.

If, after step S32, execution task switching control unit 130 is notified by program execution control device 190 of the stopping of a task execution, the execution task switching control processing as described above is performed by the various units (execution task switching control unit 130 being central among these) in task scheduling device 100. Thus, the execution of a task (or the tasks in a task group) whose priority level is temporality changed to a higher level in step S32 can be continued at a faster rate than would have occurred at the original priority level, and as a result the release of the system resource identified by the resource ID obtained by priority level changing unit 180 in step S31 can be hastened.

Following step S32, priority level changing unit 180 monitors in-use resource ID 209 in the task control information of the task holding the system resource, and waits for the resource ID obtained in step S31 to be removed from in-use resource ID 209.

When the system resource identified by the resource ID obtained by priority level changing unit 180 in step S31 is released, program execution control device 190 notifies task control information generation unit 110 of the release, and in response to this, unit 110 updates in-use system resource 209 in the task control information of the task that was holding the system resource.

When the system resource identified by the resource ID obtained in step S31 has been released (i.e. when the resource ID obtained in step S31 is no longer shown in in-use resource ID 209), priority level changing unit 180 sets priority level 203 of the task (or task group if the task is attached to a task group) that was holding the system resource to the value shown in original priority level 208. Then, in accordance with the change in priority level 203, unit 180 rearranges the position in the main ready queue of the element relating to the task or task group whose priority level has been changed back to its original level (step S33), and ends the priority level temporary change processing. Thus completes the description of the priority level temporary change processing.

### 1-4 Detailed Examples of the Operations

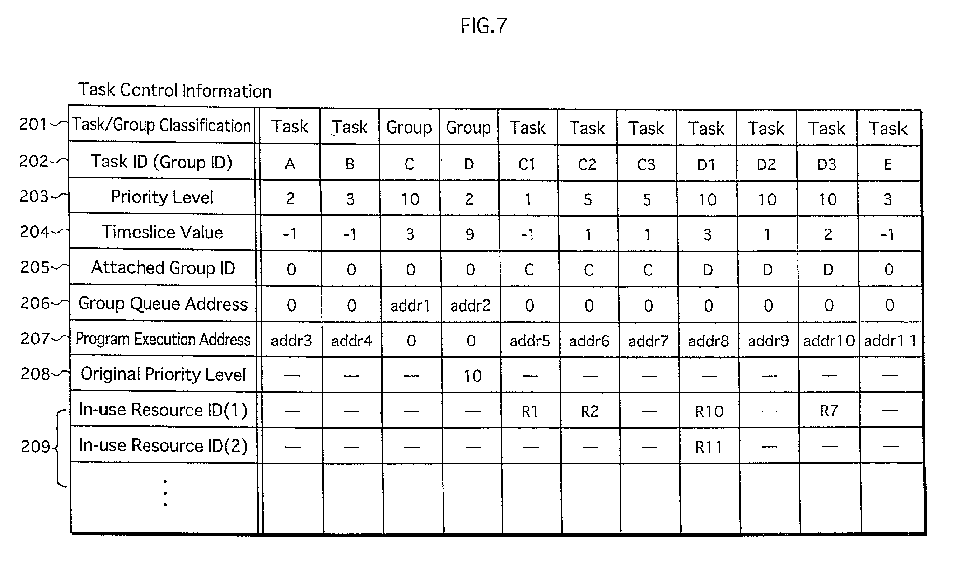

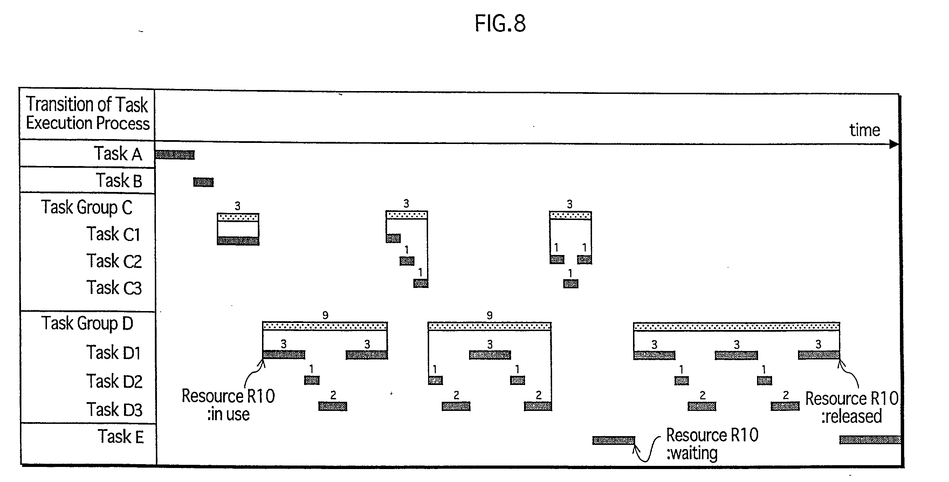

The execution task switching control processing and the priority level temporary change processing will now be described using detailed examples and with reference to Figs.7 and 8. Fig.8 is a timechart showing the transition over time of execution periods relating to tasks.

Here, task control information storage unit 111 stores task control information having the content shown in Fig.2, and the content of the ready queues in ready queue storage unit 121 is as shown in Fig.3.

### 1-4-1 Execution of Task A

Firstly, execution task switching control unit 130 focuses on the task ID included in the head element of main ready queue 301, which is the task ID of task A in the given example (step S701), and since task A is shown in task/group classification 201 to be a task (step S702), unit 130 sets the execution ready queue to indicate the main ready queue (step S703), has task execution period counting unit 150 start incrementing the task execution period counter, notifies task switching period detection unit 140 of the task ID of task A (step S707), and instructs program execution control device 190 to execute the program corresponding to task A (step S708).

Since the timeslice value of task A is "-1", task switching period detection unit 140 does not notify execution task switching control unit 130 of the elapse of an execution period, and task A is executed until it is, for example, completed or placed in a waiting-state.

Next, when a notification is received from program execution control device 190 that execution of task A has been stopped, execution task switching control unit 130 removes the head element of the ready queue that includes the task ID of task A (steps S714, S715), and since the execution ready queue does indicate the main ready queue in the given example, step S713 is "yes", and unit 140 returns to step S701 and again focuses on the element at the head of the main ready queue.

### 1-4-2 Execution of Task B

Having returned to step S701, execution task switching control unit 130 focuses on the task ID of task B included in the head element of main ready queue 301 (step S701), and executes the same processing as for task A above (steps S702, S703, S707, S708), stops the execution of task B (step S714), removes the element including the task ID of task B from the main ready queue (step S715), and again focuses on the head element of the main ready queue (steps S713, S701).

### 1-4-3 Execution of Task C1 in Task Group C

Having again returned to step S701, execution task switching control unit 130 focuses on the group ID of task group C at the head of main ready queue 301 (step S701), and since task group C is shown in task/group classification 201 to be a group (step S702), unit 130 sets the execution ready queue to indicate group ready queue 302 (step S704), has group execution period counting unit 170 start incrementing the group execution period counter, notifies group switching period detection unit 160 of the group ID of task group C (step S705), and in response to this, unit 160 notifies unit 130 when a time period corresponding to the timeslice value "3" of task group C has elapsed since the start of the task group C execution.

Following step S705, execution task switching control unit 130 focuses on the task ID of task C1 included in the head element of group ready queue 302 (step S706), has task execution period counting unit 150 start incrementing the task execution period counter, notifies task switching period detection unit 140 of the task ID of task C1 (step S707), and instructs program execution control device 190 to execute the program corresponding to task C1 (step S708).

In the given example, task C1 is set to be continually executed without restriction for a time period greater than that corresponding to the timeslice value "3" of task group C.

Thus, since the timeslice value of task C1 is "-1", execution task switching control unit 130 is not notified of the elapse of an execution period, and when notified by group switching period detection unit 160 that the execution period of task group C has elapsed (step S716), unit 130 has group execution period counting unit 170 stop incrementing the group execution period counter (step S717), removes the element that includes the group ID of task group C from the head of main ready queue 301, has ready queue entry unit 120 enter task group C in the main ready queue (step S718), instructs program execution control device 190 to stop the execution of task C1 (step S719), has task execution period counting unit 150 stop incrementing the task execution period counter (step S720), and again focuses on the head element in main ready queue 301 (step S701).

### 1-4-4 Execution of Task D1 in Task Group D

Having again returned to step S701, execution task switching control unit 130 focuses on the group ID of task group D at the head of main ready queue 301 (step S701), and since task group D is shown in task/group classification 201 to be a group (step S702), unit 130 sets the execution ready queue to indicate group ready queue 303 (step S704), has group execution period counting unit 170 start incrementing the group execution period counter, notifies group switching period detection unit 160 of the group ID of task group D (step S705), and in response to this, unit 160 notifies unit 130 when a time period corresponding to the timeslice value "9" of task group D has elapsed since the start of the task group D execution.

Following step S705, execution task switching control unit 130 focuses on the task ID of task D1 included in the head element of group ready queue 303 (step S706), has task execution period counting unit 150 start incrementing the task execution period counter, notifies task switching period detection unit 140 of the task ID of task D1 (step S707), and instructs program execution control device 190 to execute the program corresponding to task D1 (step S708).

Since the timeslice value of task D1 is "3", task switching period detection unit 140 notifies execution task switching control unit 130 when a time period corresponding to the timeslice value "3" has elapsed since the start of the task D1 execution (step S709), and on receipt of the notification from unit 140, unit 130 instructs program execution control device 190 to stop the execution of task D1 (step S710), has task execution period counting unit 150 stop incrementing the task execution period counter (step S711), removes the element that includes the task ID of task D1 from group ready queue 303, has ready queue entry unit 120 reenter the task ID of task D1 (step S712), and judges whether the execution ready queue indicates main ready queue 301 (step S713). Since the execution ready queue does indicate group ready queue 303 in the given example, unit 130 moves to step S706, focuses on the task ID of task D2 included in the head element of group ready queue 303, and performs the processing necessary to execute task D2.

### 1-4-5 Execution of Task D2 in Task Group D

Following on, execution task switching control unit 130 instructs the execution of task D2 (step S708), stops the execution of task D2 when a time period corresponding to the timeslice value "1" of task D2 has elapsed (steps S709, S710), removes the head element from group ready queue 303, and reenters the task ID of task D2 (step S712).

Following on, under the control of execution task switching control unit 130, task D3 is executed for a time period corresponding to the timeslice value "2" of task D3, and when the execution period of task D2 has elapsed, task D1 is once again executed for the time period corresponding to the timeslice value "3" of task D1. Here, the elapse of the execution period of task D1 coincides with the elapse of the execution period (i.e. timeslice value "9") of task group D, and the task execution returns to task C1 in task group C. Here, in the given example, task C1 is placed in a waiting-state after the elapse of a time period corresponding to a timeslice value "1" from the start of the task C1 execution.

Thus, following on, tasks C2 and C3 are each executed for a time period corresponding to the timeslice value "1" of tasks C2 and C3, at which point the time period corresponding to the timeslice value "3" of task group C elapses, and so execution task switching control unit 130 instructs the execution of the tasks in task group D. Following on, when the time period corresponding to the timeslice value "9" of task group D elapses, execution task switching control unit 130 instructs the execution of the tasks in task group C, and so on until all the tasks in task groups C and D are completed.

### 1-4-6 Generation of a Task E having a High Priority Level

The following description relates to the generation of a new task E at the point in time when the tasks in task group C have been executed for the time period corresponding to the timeslice value "3" of task group C. Here, task E has a priority level of "3", which is higher than the priority level of ,task groups C and D.

When the execution of a new AP is instructed, for example, program execution control device 190 requests task control information generation unit 110 to generate task control information relating to a new task (i.e. task E in the given example) corresponding to the new AP, and requests ready queue entry unit 120 to enter task E in the main ready queue.

Then, when instructed by execution task switching control unit 130 to execute task E, program execution control device 190 starts executing the AP corresponding to task E.

Here, in the given example, the AP corresponding to task E tries to secure the system resource identified by the resource ID "R10". However, this system resource is currently being held by task D1, and so task E is placed in a waiting-state.

As such, program execution control device 190 sends the resource ID "R10" to priority level changing unit 180 in order to notify unit 180 that a system resource-waiting condition has occurred, and in response to this, unit 180 obtains the resource ID and the priority level "3" of task E (step S31), detects by referring to the task control information that task D1 is currently holding the system resource specified by the resource ID "R10", changes the priority level 203 of task group D that includes task D1 from "10" to "2" (i.e. one level higher than the priority level "3" of task E), saves the pre-change priority level "10" as original priority level 208, and rearranges the ordering of the elements in the main ready queue in response to the change in priority level 203 of task group D (step S32).

Next, when notified by program execution control device 190 that the execution of task D1 has been stopped, execution task switching control unit 130 switches the task to be executed.

Fig.7 shows, in grid form, an exemplary content of the task control information after the priority level of task group D has been changed.

Since the priority level of task group D is now higher than the priority level of task group C, the tasks attached to task group D are executed repeatedly as described above under the control of execution task switching control unit 130.

When the system resource identified by the resource ID "R10" is released at some point during the repeated execution of task D1, task control information generation unit 110, having being notified of the release by program execution control device 190, updates the task control information by deleting "R10" from in-use resource ID 209 of task D1. When the task control information has been updated, priority level changing unit 180 returns to a level "10" the priority level of task group D containing task D1 that was holding the system resource identified by the resource ID "R10" (step S33). Next, having detected the release of the system resource identified by the resource ID "R10", device 190 performs processing to enter task E, which is to be changed from a waiting-state to a ready-state, into the main ready queue via ready queue entry unit 120.

Next, execution task switching control unit 130 instructs the execution of task E, and task E is thus executed. If the execution of task E is stopped at some point, the execution of the tasks in task groups C and D is again carried out alternately as described above.

The transition in the execution process of each of the tasks is shown in the timechart of Fig.8.

### 2. Embodiment 2

A task scheduling device according to an embodiment 2 of the present invention will now be described. The task scheduling device of embodiment 2 varies in part from task scheduling device 100 of embodiment 1.

In comparison to task scheduling device 100, the task scheduling device of embodiment 2 does not perform processing to change,the priority level of a task (or task group if the task is attached to a task group) holding a system resource required by a high priority task, and instead performs processing related to the carrying over of timeslice periods relating to task groups and the tasks structuring a task group.

Specifically, when the execution of a task or a task group is stopped before the elapse of a time period corresponding to the timeslice value of the task or task group, the task scheduling device of embodiment 2, when the task or task group is next targeted for execution, continues the execution of the task or task group for the time period remaining when the execution was stopped. In other words, the task scheduling device of embodiment 2 determines the period remaining when a time period corresponding to the timeslice value of the task or task group has yet to be fully utilized, as the period of continuous execution when the task or task group next becomes the execution target.

### 2-1 Structure

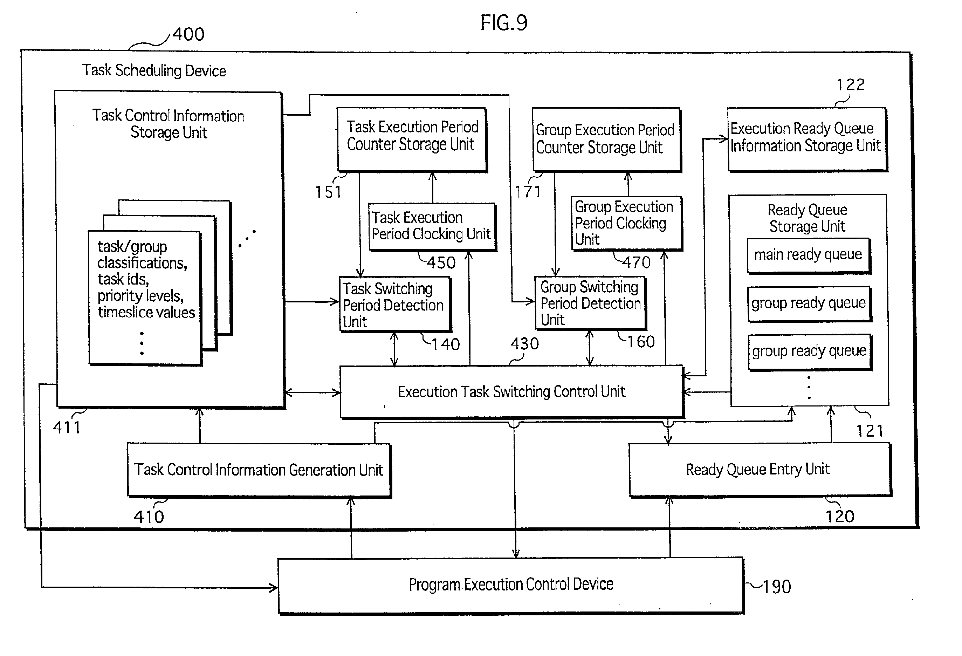

Fig.9 is a functional block diagram of a task scheduling device 400 according to embodiment 2 of the present invention.

As shown in Fig.9, task scheduling device 400 only varies in part from task scheduling device 100, and includes a task control information generation unit 410, a task control information storage unit 411, ready queue entry unit 120, ready queue storage unit 121, execution ready queue information storage unit 122, an execution task switching control unit 430, task switching period detection unit 140, a task execution period counting unit 450, task execution period counter storage unit 151, group switching period detection unit 160, a group execution period counting unit 470, and group execution period counter storage unit 171. Furthermore, device 400 operates in liaison with program execution control device 190. Structural elements in task scheduling device 400 that correspond to structural elements in task scheduling device 100 are shown in Fig.9 using the same numbering as in Fig.1, and a detailed description of these structural elements has been omitted.

Task control information generation unit 410 functions as follows. When a request to generate task control information is received from program execution control device 190, unit 410 generates the requested task control information, and stores the generated task control information in task control information storage unit 411, which is an area in memory. If the request to generate task control information relates to a task group, unit 410, in addition to generating the requested task control information, allocates an area for storing a group ready queue in ready queue storage unit 121.

In comparison to task control information generation unit 110 as shown in embodiment 1, task control information generation unit 410 includes in the generated task control information a "completed execution period" data element that shows the length of time that a task has been executed. A detailed description of this new data element is given in a later section.

Task execution period counting unit 450 functions as follows. When an instruction is received to start the counting, unit 450 starts incrementing the task execution period counter, and when an instruction is received to stop the counting, unit 150 stops incrementing the task execution period counter.

Group execution period counting unit 470 functions as follows. When an instruction is received to start the counting, unit 470 starts incrementing the group execution period counter, and when an instruction is received to stop the counting, unit 470 stops incrementing the group execution period counter.

Execution task switching control unit 430 varies in part from execution task switching control unit 130 shown in embodiment 1. In general, unit 430 functions to refer to each of the ready queues and to control the switching of the task to be executed.

Specifically, when (i) notified by task switching period detection unit 140 that a task execution period has elapsed, or (ii) notified by group switching period detection unit 160 that a group execution period has elapsed, or (iii) when a change in the head element of the main ready queue or a ready queue indicated by the execution ready queue is detected, execution task switching control unit 430 instructs program execution control device 190 to stop the execution of the task currently being executed, specifies a task identified by the task ID included in the head element of the ready queue as the next task to be executed, and instructs device 190 to start the execution of the specified task. Furthermore, when notified by device 190 that execution of a task has been stopped, unit 430 removes the head element from the ready queue, specifies a task identified by the task ID included in the element now at the head of the ready queue as the next task to be executed, and instructs device 190 to start the execution of the specified task.

Furthermore, in order to control the switching of tasks to be executed, execution task switching control unit 430, depending on the situation, refers to the task control information, refers to and updates the content of execution ready queue information storage unit 122, instructs task execution period counting unit 450 or group execution period counting unit 470 to start or stop the counting, notifies task switching period detection unit 140 of a task ID, notifies group switching period detection unit 160 of a group ID, sets the task execution period counter or the group execution period counter to the value of completed execution period 508, and reenters the task or task group into a ready queue stored in ready queue entry unit 120.

### 2-2 Data

The following description relates to the task control information stored in task control information storage unit 411.

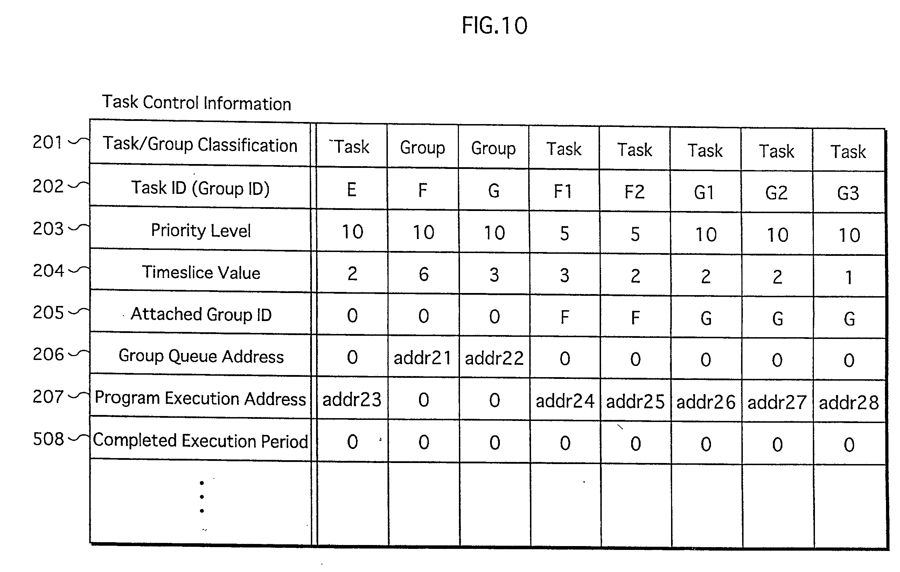

Fig.10 shows a data structure of task control information generated by task control information generation unit 410 and stored in control information storage unit 411, and additionally shows, in grid form, an exemplary content of the task control information.

Data elements in the task control information of embodiment 2 that correspond to data elements in embodiment 1 are shown in Fig.10 using the same numbering as in Fig.2.

Completed execution period 508 in Fig.10 takes a "0" value when the task control information is initially generated, and after a task has been executed, completed execution period 508 is referred to and updated by execution task switching control unit 430.

The exemplary content in Fig.10 shows task E, tasks F1 and F2 structuring task group F, and task G1, G2, and G3 structuring task group G as being in an executable-state. Here, the timeslice values are shown in predetermined clock tick units. Here, it should be noted that task E in embodiment 2 is not related to task E in embodiment 1.

In the given example, task E, and task groups F and G all have the same priority level (i.e. "10"), and timeslice values of "2", "6", and "3", respectively. Tasks F1 and F2 in task group F also have the same priority level (i.e. "5"), and timeslice values of "3" and "2", respectively. Tasks G1, G2, and G3 in task group G also have the same priority level (i.e. "10"), and timeslice values of "2", "2", and "1", respectively.

The following description relates to the ready queues stored in ready queue storage unit 121.

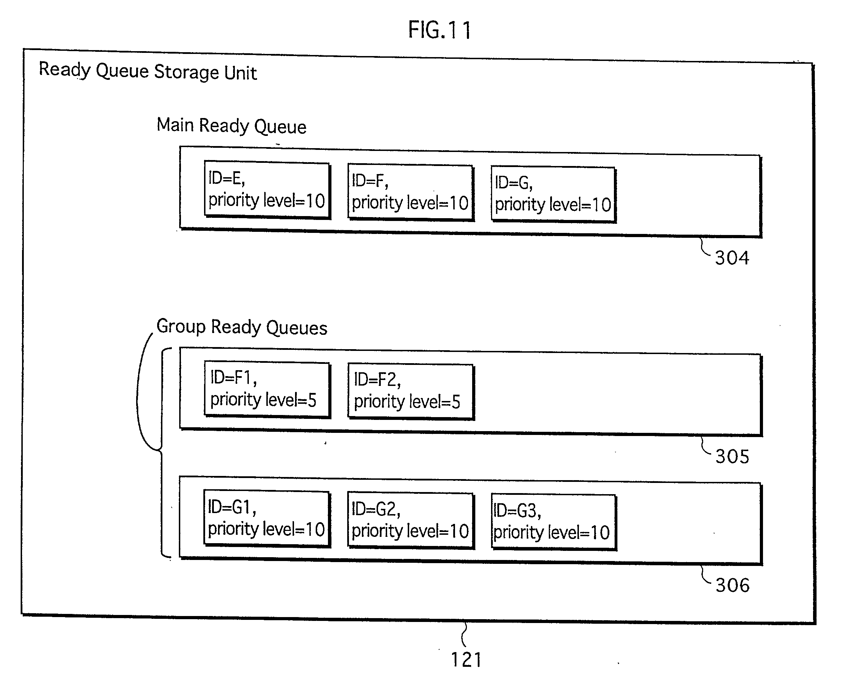

Fig.11 shows an exemplary content of the ready queues stored in ready queue storage unit 121.

Ready queue storage unit 121 stores a main ready queue in advance, and may also store one or more group ready queues provided by task control information generation unit 410.

The exemplary content shown in Fig.11 corresponds to the task control information shown in Fig.10. As shown in Fig.11, task E, task group F, and task group G have been entered into a main ready queue 304. Also, tasks F1 and F2 have been entered into a group ready queue 305 corresponding to task group F, and tasks G1, G2, and G3 have been entered into a group ready queue 306 corresponding to task group G. The head of each ready queue is to the left, and the elements in the ready queues are always stored in order of priority by ready queue entry unit 120.

### 2-3 Operations

Task scheduling device 400 performs an execution task switching control processing operation that varies in part from the execution task switching control processing operation performed by task scheduling device 100 in embodiment 1. The following description relates to the execution task switching control processing performed by task scheduling device 400.

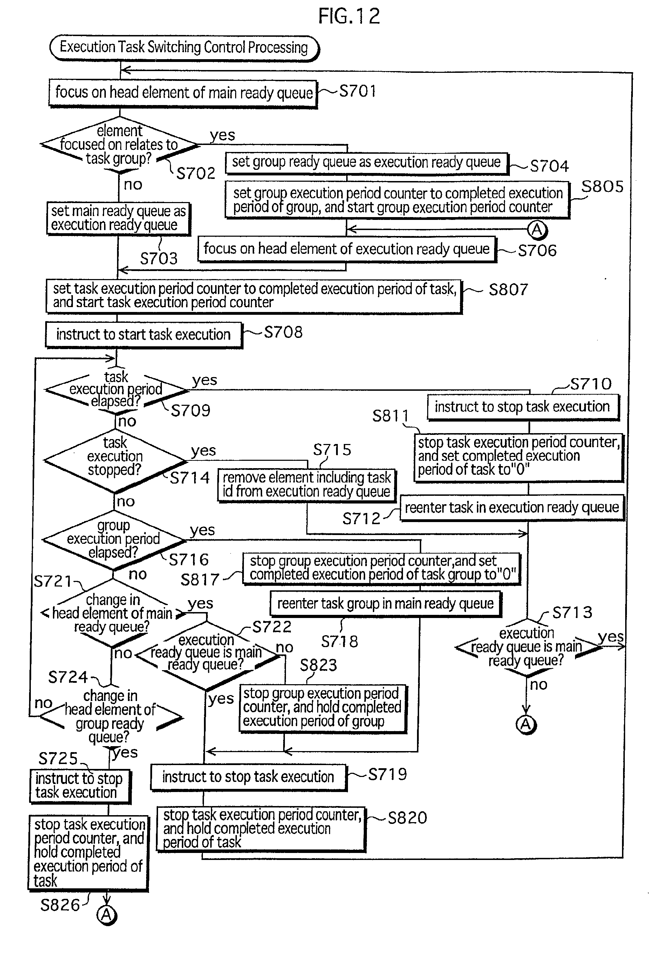

Fig.12 is a flowchart showing the execution task switching control processing performed by task scheduling device 400. Here, the processing steps in Fig.12 that correspond to processing steps in Fig. 5 are shown using the same numbering.

Firstly, execution task switching control unit 430 focuses on the element at the head of the main ready queue (step S701), searches the task control information stored in task control information storage unit 411 for task control information corresponding to the ID (i.e. task ID or group ID) included in the element, and judges whether the element focused on in the main ready queue relates to a task group by referring to task/group classification 201 in the corresponding task control information (step S702)

If judged that the element focused on does not relate to a task group (step S702 = "no"; i.e. element focused on relates to a task), execution task switching control unit 430 sets the execution ready queue stored in execution ready queue information storage unit 122 to indicate the main ready queue (step S703).

On the other hand, if judged that the element focused on does relate to a task group (step S702 = "yes"), execution task switching control unit 430 sets the execution ready queue to indicate the group ready queue corresponding to the task group (step S704).

Following step S704, execution task switching control unit 430 obtains the value of completed execution period 508 in the task control information of the task group identified by the group ID in the element focused on, sets the group execution period counter to the obtained value, instructs group execution period counting unit 470 to start the counting, and sends the group ID of the task group to group switching period detection unit 160. In response to this, unit 470 starts incrementing the group execution period counter, and unit 160 obtains the value of timeslice value 204 from the task control information relating to the task group, and starts to repeatedly judge whether the group execution period counter equals the obtained timeslice value (step S805).

Following step S805, execution task switching control unit 430 focuses on the element at the head of the ready queue indicated by the execution ready queue (step S706).

Following step S703 or step S706, execution task switching control unit 430 obtains the value of completed execution period 508 in the task control information of the task identified by the task ID in the element last focused on (i.e. in step S701 or S706), sets the task execution period counter to the obtained value, instructs task execution period counting unit 450 to start the counting, and sends the task ID in the element focused on in the main ready queue to task switching period detection unit 140. In response to this, unit 450 starts incrementing the task execution period counter, and unit 140 obtains the value of timeslice value 204 from the task control information of the task identified by the task ID, and starts to repeatedly judge whether the task execution period counter equals the obtained timeslice value (step S807).

Following step S807, execution task switching control unit 430 sends the task ID included in the element last focused on to program execution control device 190, and has device 190 start executing a program (step S708).

Following step S708, execution task switching control unit 130 judges whether the elapse of the task execution period has been notified by task switching period detection unit 140 (step S709). If judged that notification has not been received (step S709 = "no"), unit 430 judges whether the stopping of the task execution has been notified by program execution control device 190 (step S714). If judged that notification has not been received (step S714 = "no"), unit 430 judges whether the elapse of the task group execution period has been notified by group switching period detection unit 160 (step S716). If judged that notification has not been received (step S716 = "no") , unit 430 judges whether there has been a change in the head element of the main ready queue (step S721). In judges that there has not been a change (step S721 = "no"), unit 430 judges whether the execution ready queue indicates a group ready queue, and if "yes", whether there has been a change in the head element of the group ready queue (step S724).

In the judgment in step S709, if judged that the elapse of the task execution period has been notified by task switching period detection unit 140 (step S709 = "yes") , unit 430 instructs program execution control device 190 to stop the execution of the task (step S710), and in response to this, device 190 stops executing the program corresponding to the task.

Following step S710, execution task switching control unit 430 has task execution period counting unit 450 stop incrementing the task execution period counter, and sets to "0" the value of completed execution period 508 relating to the executed task (step S811).

Following step S811, execution task switching control unit 430 removes, from the head of the ready queue indicated by the execution ready queue, the element that includes the task ID of the task whose execution was instructed to be stopped in step S710, and sends a request to ready queue entry unit 120 to reenter the task. In response to this, unit 120 enters the task into the ready queue indicated by the execution ready queue (step S712).

Following step S712, execution task switching control unit 430 judges whether the ready queue indicated by the execution ready queue is the main ready queue (step S713).

If judged that the execution ready queue does indicate the main ready queue (step S713 = "yes"), execution task switching control unit 430 returns to step S701, focuses on the head element of the main ready queue, and performs the processing necessary to execute a new task . On the other hand, if judged that the execution ready queue does not indicate the main ready queue (step S713 = "no"), execution task switching control unit 430 returns to step S706, focuses on the head element of the group ready queue indicated by the execution ready queue, and performs the processing necessary to execute a new task.

In the judgment in step S714, if judged that the stopping of the task execution has been notified by program execution control device 190 (step S714 = "yes"), unit 430 removes the head element (i.e. the element last focused on in S701 or S706) from the ready queue indicated by the execution ready queue (step S715), and moves on to step S713 (described above).

In the judgment in step S716, if judged that the elapse of the task group execution period has been notified by group switching period detection unit 160 (step S716 = "yes"), execution task switching control unit 430 has group execution period counting unit 470 stop incrementing the group execution period counter, and sets to "0" the value of completed execution period 508 relating to the task group (step S817).

Following step S817, execution task switching control unit 430 removes the head element from the main ready queue, and sends a request to ready queue entry unit 120 to reenter into the main ready queue the task group identified by the group ID in the removed element. In response to this, unit 120 enters the task group into the main ready queue (step S718).

Following step S718, execution task switching control unit 430 instructs program execution control device 190 to stop the execution of the task (step S719), and in response to this, device 190 stops executing the program corresponding to the task.

Following step S719, execution task switching control unit 430 has task execution period counting unit 450 stop incrementing the task execution period counter, obtains the value of the task execution period counter, and sets completed execution period 508 relating to the stopped task to the obtained value (step S820).

Following step S820, unit 430 returns to step S701, focuses on the head element of the main ready queue, and performs the processing necessary to execute a new task.

In the judgment in step S721, if judged that there has been a change in the head element of the main ready queue (step S721 = "yes"), execution task switching control unit 430 judges whether the ready queue indicated by the execution ready queue is the main ready queue (step S722). If judged that the execution ready queue does not indicate the main ready queue (step S722 = "no"), unit 430 has group execution period counting unit 470 stop incrementing the group execution period counter, obtains the value of the group execution period counter, and sets completed execution period 508 of the task group corresponding to the group ready queue shown by the execution ready queue to the obtained value (step S823).

Following step S823 or if judged in step S722 that the execution ready queue does indicate the main ready queue (step S722 = "yes"), execution task switching control unit 430 instructs program execution control device 190 to stop the execution of the task (step S719), has task execution period counting unit 450 stop incrementing the task execution period counter, obtains the value of the task execution period counter, and sets completed execution period 508 relating to the stopped task to the obtained value (step S820). Unit 430 then returns to step S701, focuses on the head element of the main ready queue, and performs the processing necessary to execute a new task.

In the judgment in step S724, if judged that the execution ready queue does indicate a group ready queue and that there has been a change in the head element of the group ready queue (step S724 = "yes"), execution task switching control unit 430 instructs program execution control device 190 to stop the execution of the task (step S725), has task execution period counting unit 450 stop incrementing the task execution period counter, obtains the value of the task execution period counter, and sets completed execution period 508 relating to the stopped task to the obtained value (step S826). Unit 430 then returns to step S706, focuses on the head element of the group ready queue indicated by the execution ready queue, and performs the processing necessary to execute a new task.

On the other hand, if judged that the conditions of step S724 have not been fulfilled (step S724 = "no"), execution task switching control unit 430 returns to step S709, and judges whether the elapse of the task execution period has been notified by task switching period detection unit 140. Thus completes the description of the execution task switching control processing performed by task scheduling device 400.

According to the processing operation described above, if during the execution of a task attached to a task group, the execution period of the task group elapses before the elapse of a time period corresponding to a timeslice value of the task, task scheduling device 400 conducts a continuous execution of the task when the task next becomes the execution target, the continuous execution being based, not on the time period corresponding to the timeslice value of the task, but on a time period calculated as the difference between (i) the time period corresponding to the timeslice value of the task, and (ii) a time period from when the task was specified until when the task group was switched. As a result, it is possible to prevent the disordering of the continuous execution periods distributed to each of the tasks in a task group in the case of task scheduling being conducted by switching the task group targeted for execution based on a timeslice value of each of the task groups.

### 2-4 Detailed Examples of the Operations

The execution task switching control processing performed by task scheduling device 400 will now be described using detailed examples.

Here, task control information storage unit 111 stores task control information having the content shown in Fig.10, and the content of the ready queues in ready queue storage unit 121 is as shown in Fig.11.

### 2-4-1 Execution of Task E

Firstly, execution task switching control unit 430 focuses on the task ID included in the head element of main ready queue 304, which is the task ID of task E in the given example (step S701), and since task E is shown in task/group classification 201 to be a task (step S702), unit 430 sets the execution ready queue to indicate the main ready queue (step S703), sets the task execution period counter to the "0" value of completed execution period 508 in the task control information relating to task E, has task execution period counting unit 450 start incrementing the task execution period counter, notifies task switching period detection unit 140 of the task ID of task E (step S807), and instructs program execution control device 190 to execute the program corresponding to task E (step S708).

Since timeslice value 204 of task E is "2", task switching period detection unit 140 notifies execution task switching control unit 430 when a time period corresponding to the timeslice value "2" has elapsed from the start of the execution of task E.

On receipt of the notification from unit 140 (step S709), execution task switching control unit 430 instructs program execution control device 190 to stop the execution of task E (step S710), has task execution period counting unit 450 stop incrementing the task execution period counter (step S811), removes the element that includes the task ID of task E from main ready queue 304, has ready queue entry unit 120 reenter the task ID of task E (step S712), and judges whether the execution ready queue indicates the main ready queue (step S713). Since the execution ready queue does indicate main ready queue 304 in the given example, unit 430 moves to step S701, and focuses on the group ID of task group F included in the head element of main ready queue 304.

### 2-4-2 Execution of Task F1 in Task Group F

Next, since task group F is shown in task/group classification 201 to be a group (step S702), execution task switching control unit 430 sets the execution ready queue to indicate group ready queue 305 (step S704), sets the group execution period counter to the "0" value of completed execution period 508 relating to task group F, has group execution period counting unit 470 start incrementing the group execution period counter, and notifies group switching period detection unit 160 of the group ID of task group F (step S805), and in response to this, group switching period detection unit 160 notifies unit 430 when a time period corresponding to the timeslice value "6" of task group F has elapsed.

Following step S805, execution task switching control unit 430 focuses on the task ID of task F1 included in the head element of group ready queue 305 (step S706), sets the task execution period counter to the "0" value of completed execution period 508 relating to task F1, has task execution period counting unit 450 start incrementing the task execution period counter, notifies task switching period detection unit 140 of the task ID of task F1 (step S707), and instructs program execution control device 190 to execute the program corresponding to task F1 (step S708).

Next, when the time period corresponding to the timeslice value "3" of task F1 has elapsed since the start of the execution of task F1, task switching period detection unit 140 notifies execution task switching control unit 430 that the execution period of task F1 has elapsed (step S709), and in response to this, unit 430 has program execution control device 190 stop the execution of task F1 (step S710), has task execution period counting unit 450 stop incrementing the task execution period counter, sets completed execution period 508 relating to task F1 to "0" (step S811), removes the element including the task ID of task F1 from group ready queue 305 indicated by the execution ready queue, has ready queue entry unit 120 reenter task F1 (step S712), and judges whether the main ready queue is indicated by the execution ready queue (step S713). Since group ready queue 305 is indicated by the execution ready queue in the given example, unit 430 moves to step S706, and focuses on the task ID of task F2 included in the head element of group ready queue 305.

### 2-4-3 Execution of Task F2 in Task Group F

Next, execution task switching control unit 430 instructs program execution control device 190 to execute task F2 for a time period corresponding to the timeslice value "2" of task F2 (steps S807, S708, S709, S710, S811, S712, S713), and once again focuses on the task ID of task F1 included in the head element of group ready queue 305 indicated by the execution ready queue (step S706).

### 2-4-4 Execution of Task F1 in Task Group F

Next, execution task switching control unit 430 instructs program execution control device 190 to execute task F1 (steps S807, S708).

Here, the elapse of the time period corresponding to the timeslice value "6" of task group F occurs after a time period corresponding to only "1" unit of the timeslice value "3" of task F1 has elapsed, and group switching period detection unit 160 notifies execution task switching control unit 430 that the execution period of task group F has elapsed.

On receipt of the notification from group switching period detection unit 160 (step S716), execution task switching control unit 430 has group execution period counting unit 470 stop incrementing the group execution period counter, sets the value of completed execution period 508 relating to task group F to "0" (step S817), removes the head element (i.e. relating to task group F) from the main ready queue, and has ready queue entry unit 120 reenter task group F in the main ready queue (step S718). Furthermore, unit 430 has program execution control device 190 stop the execution of task F1 (step S719), has task execution period counting unit 450 stop incrementing the task execution period counter, obtains the value of the task execution period counter, which shows "1" in the given example, sets completed execution period 508 relating to the stopped task F1 to the obtained "1" value (step S820), and focuses on the group ID of task group G included in the head element of the main ready queue (step S701).

### 2-4-5 Execution of Task G1 in Task Group G

Task group G has a timeslice value of "3", and execution task switching control unit 430 specifies task G1 (timeslice value "2") in task group G as the execution target (steps S702, S704, S805, S706, S807, S708), stops the execution of task G1 when the time period corresponding to the timeslice value "2" has elapsed since the start of the execution of task G1 (steps S709, S710, S811, S712, S713), and executes task G2 having a timeslice value of "2" for a time period corresponding to the remaining "1" unit of the timeslice value "3" of task group G (steps S701, S702, S704, S805, S706, S807, S708). When the execution period of task group G has elapsed (steps S709, S710), unit 430 shifts, via ready queue entry unit 120, the element that includes the group ID of task group G from the head of the main ready queue to the end of the main ready queue (steps S817, S718), stops the execution of task G2 (steps S109, S820), and focuses on the task ID of task E included in the head element of the main ready queue (step S701).

### 2-4-6 Execution of Task E

Next, execution task switching control unit 430 executes task E for the time period corresponding to the timeslice value "2" of task E (steps S702, S703, S807, S708, S709), stops the execution of task E (steps S710, S811), shifts, via ready queue entry unit 120, the element that includes the task ID of task E from the head of the main ready queue to the end of the main ready queue (steps S712, S713), and focuses on the group ID of task group F included in the head element of the main ready queue (step S701).

### 2-4-7 Execution of Task F1 in Task Group F

Next, execution task switching control unit 430 focuses on the task ID of task F1 included in the head element of group ready queue 305 (steps S702, S704, S805, S706). Here, since the value of completed execution period 508 relating to task F1 is currently set to "1" in the given example, unit 430 obtains the value "1", sets the task execution period counter to the obtained value "1", has task execution period counting unit 450 start incrementing the task execution period counter (i.e. from the "1" value), and has program execution control device 190 start the execution of task F1 (step S807)

Here, since the task execution period counter has been set to "1", task switching period detection unit 140 notifies execution task switching control unit 430 of the elapse of the execution period of task F1 when a time period corresponding to the remaining "2" units of the timeslice value "3" of task F1 has elapsed.

On receipt of the notification from task switching period detection unit 140 (step S709), execution task switching control unit 430 instructs program execution control device 190 to stop the execution of task F1 (step S710).

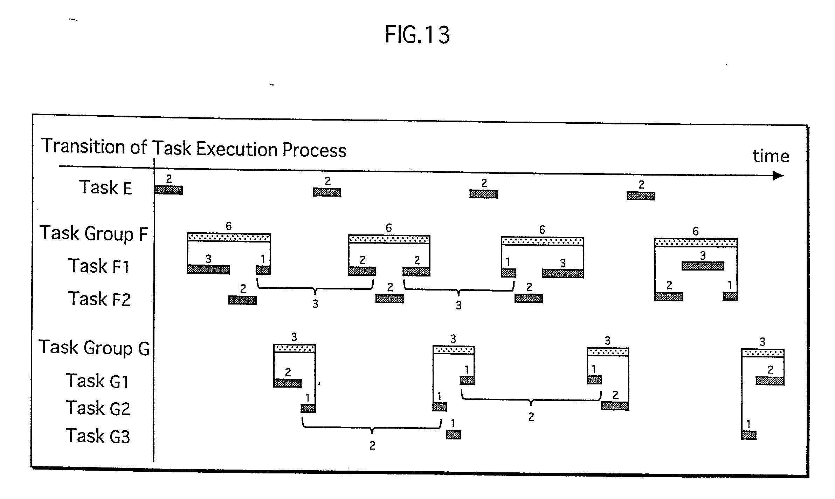

The transition in the execution periods of the tasks as described above is shown in Fig.13.

As shown in Fig.13, if the execution of a task is stopped because the execution period of the task group to which the task is attached has elapsed, the above processing allows, when the task next becomes the execution target, for the allotment to the task of a continuous execution period corresponding to the timeslice value remaining when execution of the task was stopped.

### 3. Variations and Related Matters

Task scheduling devices according to the present invention are described above in embodiments 1 and 2. However, the present invention is, of course, not limited to these embodiments. Exemplary variations of the embodiments as well as other related matters are described below.
(1) The division of functions in embodiments 1 and 2 between the task scheduling device and the program execution control device is merely exemplary. Since both of these elements are structural elements of the OS of a computer, it is possible, for example, for the task control information generation unit and the ready queue entry unit to be provided externally to the task scheduling device, and for the program execution control device to be included in the task scheduling device.
(2) In embodiments 1 and 2, the task execution period counting unit functions to increment the task execution period counter and the group execution period counting unit functions to increment the group execution period counter. However, the present invention is not limited to this incrementing method, and may alternatively incorporate a decrementing method.
   Specifically, the task execution period counting unit (or the group execution period counting unit) may function to decrement the task execution period counter (or the group execution period counter) over time, without resetting the counters. The task switching period detection unit (or the group switching period detection unit) may then notify the execution task switching control unit when the value of the task execution period counter (or the group execution period counter) reaches "0". Here, execution task switching control unit 130 of embodiment 1 may, prior to having the task execution period counting unit (or the group execution period counting unit) start the counting, sets the task execution period counter (or the group execution period counter) to the timeslice value of the task (or task group) to be executed. Here, furthermore, task switching control unit 430 of embodiment 2 may set completed execution period 508 in the task control information corresponding to a task (or task group) to be executed to the timeslice value of the task (or task group) rather than "0".
(3) In embodiments 1 and 2, each of the elements stored in a ready queue includes a combination of a task ID (or group ID) and a priority level. However, each element may include (i) only a task ID (or group ID), or (ii) information such as the address of related task control information, or (iii) information that distinguishes between tasks and task groups and that allows related task control information to be accessed.
(4) In embodiments 1 and 2, an unrestricted continuous execution period (i.e. no timeslice-based control restrictions on the execution of a task) is expressed as a timeslice value of "-1". However, values other than "-1" may be used to express the unrestricted continuous execution period; that is, any value that allows for the identification of this condition may be used. For example, the unrestricted continuous execution period may be expressed as a data item other than a timeslice value shown in the task control information, and it may take a numerical value other than "-1". Moreover, the value of priority levels, task IDs, and the like in embodiments 1 and 2 may take values other than those described in the embodiments.
(5) In embodiments 1 and 2, the main ready queue stores (i) elements that include the task ID of independent tasks not attached to a task group, and (ii) elements that include the group ID of task groups. However, with respect to an element that includes the group ID of a task group, this element may be deleted from the main ready queue by the ready queue entry unit, for example, if none of the tasks structuring the task group are entered in a corresponding group ready queue.
(6) In embodiments 1 and 2, tasks as well as task groups may be entered into the main ready queue. However, it is possible to only allow the entry of task groups into the main ready queue. In other words, all tasks may be required to be attached to a task group. In this case, an independent task may be determined as being attached to a task group that only includes a single task (i.e. the independent task in question). Then, a group ready queue corresponding to the task group containing the single task may be allocated in the ready queue storage unit, and task control information relating to this task group may be generated by the task control information generation unit.
   Furthermore, in the case that all tasks are required to be attached to a task group, and a system resource-waiting condition occurs during the execution of a task attached to a high priority task group, the priority level temporary change processing of embodiment 1 may be performed to temporality change the priority level of the task group holding the system resource to a higher level than the priority level of the task group waiting for the system resource.
(7) Task scheduling device 400 as described in embodiment 2 does not include the priority level temporary change processing function performed in embodiment 1 by priority level changing unit 180. However, priority level changing unit 180 may be provided in task scheduling device 400 of embodiment 2 in order to allow task scheduling device 400 to perform the priority level temporary change processing as described in embodiment 1.
   Furthermore, according to the priority level temporary change processing of embodiment 1, the priority level of a task (or task group if the task is attached to a task group) holding a system resource is temporality raised to one level higher than the priority level of a high priority task (i.e. "release-waiting task") waiting for the release of the system resource. However, the present invention is not limited to this structure. For example, if the priority level of the task holding the system resource is raised to one or more levels above than the priority level of the task waiting for the release of the system resource, then it may be possible to further hasten the release of the system resource. Although this effect of course depends on the priority levels of other tasks, it is generally anticipated that raising the priority level of the holding task to one or more level above the priority level of the waiting task increases the possibility of the system resource being released earlier.
(8) Task switching in embodiment 2 is conducted on the basis of the priority levels of tasks and task groups, although alternatively, task switching may be conducted on a basis other than priority levels. That is, controls relating to priority levels may be omitted from the structure.
(9) A computer program for having a computer or a device (hereafter, "computer or the like") having a program execution function perform the processing operations of the task scheduling devices in embodiments 1 and 2 (i.e. as shown in Figs.4, 5, 6, and 12) may be (i) stored on a storage medium and distributed or (ii) distributed via any of a variety of communication channels. If stored on a storage medium, the storage medium may be an IC card, an optical disk, a flexible disk, a ROM, or the like. The distributed computer program may then be used after being installed, for example, in a computer or the like, and then by executing the computer program, the computer or the like may realize the controls relating to the task scheduling described in embodiments 1 and 2.

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

## Claims

1. A task scheduling device for sequentially specifying, from a plurality of tasks, one task at a time to be executed by a task execution means, comprising:
selecting means for (i) sequentially selecting, based on a priority level of each of a plurality of task groups that include one or more tasks, each task group, and (ii) performing, on task groups having the same priority level, the sequential selecting on a round-robin basis using a timeslice value set for each of the task groups; and
specifying means for (i) sequentially specifying, based on a priority level of each task included in a task group selected by the selecting means, each task as the task to be executed by the task execution means, and (ii) performing, on tasks in the task group having the same priority level, the sequential specifying on a round-robin basis using a timeslice value set for each of the tasks.

2. The task scheduling device of claim 1, wherein
when, from a time of the selecting of a task group, a time period shown by a timeslice value of the task group elapses, the selecting means performs the sequential selecting on the round-robin basis by selecting another task group having the same priority level as the task group,
when, from a time of the specifying of a task, a time period shown by a timeslice value of the task elapses, the specifying means performs the sequential specifying on the round-robin basis by specifying another task having the same priority level as the task, and
if, from a time of the specifying of a task, a different task group to a task group including the task is selected before a time period shown by a timeslice value of the task elapses, the specifying means performs the sequential specifying next time the task is specified by specifying another task when a difference period, rather than the time period shown by the timeslice value of the task, elapses, the difference period being the difference between (i) the time period shown by the timeslice value of the task and (ii) the time period from the specifying of the task until the selecting of the other task group.

3. The task scheduling device of claim 2, comprising:
a main ready queue, being a memory area for storing identifiers that identify the task groups;
main ready queue setting means for setting in order of priority in the main ready queue, the identifiers of task groups that includes one or more tasks in an executable state;
a plurality of auxiliary ready queues, being memory areas that correspond one-to-one with the plurality of task groups, each auxiliary ready queue storing identifiers that identify the tasks included in a task group corresponding to the auxiliary ready queue;
auxiliary ready queue setting means for setting in order of priority in each auxiliary ready queue that corresponds to a task group, the identifiers of tasks in the task group that are in an executable state;
first clocking means for clocking an elapsed period from the selecting by the selecting means; and
second clocking means for clocking an elapsed period from the specifying by the specifying means, wherein
the selecting means selects a task group identified by an identifier at a head of the main ready queue, and when a time period shown by a timeslice value of the task group is clocked by the first clocking means as having elapsed, the selecting means removes the identifier of the task group from the main ready queue, and resets the removed identifier in the main ready queue via the main ready queue setting means,
the specifying means specifies a task identified by an identifier at a head of the auxiliary ready queue corresponding to the task group selected by the selecting means, and when a time period shown by a timeslice value of the task is clocked by the second clocking means as having elapsed, the specifying means removes the identifier of the task from the auxiliary ready queue, and resets the removed identifier in the auxiliary ready queue via the auxiliary ready queue setting means, and
if, from a time of the specifying of a task, a different task group to a task group including the task is selected by the selecting means before a time period shown by a timeslice value of the task is clocked by the second clocking means as having elapsed, the specifying means saves the elapsed period clocked by the second clocking means up until the selecting of the different task group, and next time the task is specified, the specifying means performs the removing and resetting of the identifier of the task when a difference period, rather than the time period shown by the timeslice value of the task, is clocked by the second clocking means as having elapsed, the difference period being the difference between (i) the time period shown by the timeslice value of the task and (ii) the saved elapsed period.

4. The task scheduling device of claim 3, further comprising:
the task execution means for executing a task specified by the specifying means.

5. The task scheduling device of claim 2, further comprising:
system resource-waiting detection means for detecting when a task specified by the specifying means is placed in a system resource-waiting state during execution, and for specifying the system resource;
system resource-holding task detection means for detecting a task that is holding the system resource specified by the system resource-waiting detection means; and
priority level changing means for changing to a higher level the priority level of a task group that includes the detected task.

6. The task scheduling device of claim 1, further comprising:
system resource-waiting detection means for detecting when a task specified by the specifying means is placed in a system resource-waiting state during execution, and for specifying the system resource;
system resource-holding task detection means for detecting a task that is holding the system resource specified by the system resource-waiting detection means; and
priority level changing means for changing to a higher level the priority level of a task group that includes the detected task.

7. The task scheduling device of claim 6, comprising:
original priority level storage means, being a memory area for storing a value as an original priority level, wherein
when the priority level of the task group that includes the detected task is changed to the higher level, the priority level changing means stores in the original priority level storage means as the original priority level, the priority level of the task group prior to the change, and
the task scheduling device further comprises:
system resource-release detection means for detecting the release, by the detected task, of the system resource specified by the system resource-waiting detection means; and
priority level restoring means for, when the release of the specified system resource is detected by the system resource-release detection means, restoring the priority level of the task group that includes the detected task to the value stored in the original priority level storage means.

8. The task scheduling device of claim 7, further comprising:
the task execution means for executing a task specified by the specifying means.

9. A task scheduling device for sequentially specifying, from a plurality of tasks, one task at a time to be executed by a task execution means, comprising:
selecting means for (i) sequentially selecting, based on a priority level of each of one or more task groups that include one or more tasks and a priority level of each of one or more independent tasks that are not included in any task group, each task group and each independent task, (ii) performing, on task groups and independent tasks having the same priority level, the sequential selecting on a round-robin basis using a timeslice value set for each of the task groups and each of the independent tasks, and (iii) specifying, if an independent task is selected by the selecting means, the independent task as the task to be executed by the task execution means; and
specifying means for, if a task group is selected by the selecting means, (i) sequentially specifying, based on a priority level of each task included in the task group, each task as the task to be executed by the task execution means, and (ii) performing, on tasks in the task group having the same priority level, the sequential specifying on a round-robin basis using a timeslice value set for each of the tasks.

10. The task scheduling device of claim 9, wherein
when, from a time of the selecting of a task group or an independent task, a time period shown by a timeslice value of the task group or the independent task elapses, the selecting means performs the sequential selecting on the round-robin basis by selecting another task group or another independent task having the same priority level as the task group or the independent task,
when, from a time of the specifying of a task, a time period shown by a timeslice value of the task elapses, the specifying means performs the sequential specifying on the round-robin basis by specifying another task having the same priority level as the task, and
if, from a time of the specifying of a task, a different task group to a task group including the task is selected before a time period shown by a timeslice value of the task elapses, the specifying means performs the sequential specifying next time the task is specified by specifying another task when a difference period, rather than the time period shown by the timeslice value of the task, elapses, the difference period being the difference between (i) the time period shown by the timeslice value of the task and (ii) the time period from the specifying of the task until the selecting of the other task group.

11. The task scheduling device of claim 9, further comprising:
system resource-waiting detection means for detecting when a task specified by the specifying means is placed in a system resource-waiting state during execution, and for specifying the system resource;
system resource-holding task detection means for detecting a task that is holding the system resource specified by the system resource-waiting detection means; and
priority level changing means for changing to a higher level the priority level of a task group that includes the detected task.

12. A control program that has a computer perform a task scheduling operation for sequentially specifying, from a plurality of tasks, one task at a time to be executed by a task execution means, the task scheduling operation comprising:
a selecting step of (i) sequentially selecting, based on a priority level of each of a plurality of task groups that include one or more tasks, each task group, and (ii) performing, on task groups having the same priority level, the sequential selecting on a round-robin basis using a timeslice value set for each of the task groups; and
a specifying step of (i) sequentially specifying, based on a priority level of each task included in a task group selected in the selecting step, each task as the task to be executed by the task execution means, and (ii) performing, on tasks in the task group having the same priority level, the sequential specifying on a round-robin basis using a timeslice value set for each of the tasks.

13. A control program that has a computer perform a task scheduling operation for sequentially specifying, from a plurality of tasks, one task at a time to be executed by a task execution means, the task scheduling operation comprising:
a selecting step of (i) sequentially selecting, based on a priority level of each of one or more task groups that include one or more tasks and a priority level of each of one or more independent tasks that are not included in any task group, each task group and each independent task, (ii) performing, on task groups and independent tasks having the same priority level, the sequential selecting on a round-robin basis using a timeslice value set for each of the task groups and each of the independent tasks, and (iii) specifying, if an independent task is selected in the selecting step, the independent task as the task to be executed by the task execution means; and
a specifying step of, if a task group is selected in the selecting step, (i) sequentially specifying, based on a priority level of each task included in the task group, each task as the task to be executed by the task execution means, and (ii) performing, on tasks in the task group having the same priority level, the sequential specifying on a round-robin basis using a timeslice value set for each of the tasks.

14. A task scheduling method for sequentially specifying, from a plurality of tasks, one task at a time to be executed in a computer by a task execution means, comprising:
a selecting step of (i) sequentially selecting, based on a priority level of each of a plurality of task groups that include one or more tasks, each task group, and (ii) performing, on task groups having the same priority level, the sequential selecting on a round-robin basis using a timeslice value set for each of the task groups; and
a specifying step of (i) sequentially specifying, based on a priority level of each task included in a task group selected in the selecting step, each task as the task to be executed by the task execution means, and (ii) performing, on tasks in the task group having the same priority level, the sequential specifying on a round-robin basis using a timeslice value set for each of the tasks.

15. A task scheduling method for sequentially specifying, from a plurality of tasks, one task at a time to be executed in a computer by a task execution means, comprising:
a selecting step of (i) sequentially selecting, based on a priority level of each of one or more task groups that include one or more tasks and a priority level of each of one or more independent tasks that are not included in any task group, each task group and each independent task, (ii) performing, on task groups and independent tasks having the same priority level, the sequential selecting on a round-robin basis using a timeslice value set for each of the task groups and each of the independent tasks, and (iii) specifying, if an independent task is selected in the selecting step, the independent task as the task to be executed by the task execution means; and
a specifying step of, if a task group is selected in the selecting step, (i) sequentially specifying, based on a priority level of each task included in the task group, each task as the task to be executed by the task execution means, and (ii) performing, on tasks in the task group having the same priority level, the sequential specifying on a round-robin basis using a timeslice value set for each of the tasks.
